# EUROPEAN PATENT APPLICATION

(11) **EP 4 654 579 A1**
(43) Date of publication of application: **26.11.2025**
(21) Application number: 24744533.1
(22) Date of filing: 09.01.2024
(51) Int. Cl.: H04N 19/167

(54) **ENCODING DEVICE, DECODING DEVICE, ENCODING METHOD, AND DECODING METHOD**

(30) Priority: 20.01.2023 US 202363440178 P
(71) Applicant: Panasonic Intellectual Property Corporation of America, Torrance, CA 90504 (US)
(72) Inventor: THONG, Jing Yuan, Singapore 469332 (SG); KARLEKAR, Jayashree, Singapore 469332 (SG); TEO, Han Boon, Singapore 469332 (SG); LIM, Chong Soon, Singapore 469332 (SG); LIM, Sugiri Pranata, Singapore 469332 (SG); ABE, Kiyofumi, Kadoma-shi, Osaka 571-0057 (JP); NISHI, Takahiro, Kadoma-shi, Osaka 571-0057 (JP); TOMA, Tadamasa, Kadoma-shi, Osaka 571-0057 (JP)
(74) Representative: Grünecker Patent- und Rechtsanwälte PartG mbB
(86) International application number: PCT/JP2024/000175
(87) International publication number: WO 2024/154610

(57) **Abstract**

An encoder (100) includes memory (152) and circuitry (151) coupled to the memory (152). Using the memory (152), the circuitry (151): encodes at least one fundamental image for use in displaying a video; and encodes, as information corresponding to each of images of the video, geometric information indicating geometric attributes within a region including a face of a person.

## Description

### [Technical Field]

The present disclosure relates to an encoder, etc.

### [Background Art]

With advancement in video coding technology, from H.261 and MPEG-1 to H.264/AVC (Advanced Video Coding), MPEG-LA, H.265/HEVC (High Efficiency Video Coding) and H.266/VVC (Versatile Video Codec), there remains a constant need to provide improvements and optimizations to the video coding technology to process an ever-increasing amount of digital video data in various applications. The present disclosure relates to further advancements, improvements and optimizations in video coding.

Note that Non Patent Literature (NPL) 1 relates to one example of a conventional standard regarding the above-described video coding technology.

### Citation List

### Non Patent Literature

NPL 1: H.265 (ISO/IEC 23008-2 HEVC)/HEVC (High Efficiency Video Coding)

### [Summary of Invention]

### [Technical Problem]

Regarding the encoding scheme as described above, proposals of new schemes have been desired in order to (i) improve coding efficiency, enhance image quality, reduce processing amounts, reduce circuit scales, or (ii) appropriately select an element or an operation. The element is, for example, a filter, a block, a size, a motion vector, a reference picture, or a reference block.

The present disclosure provides, for example, a configuration or a method which can contribute to at least one of increase in coding efficiency, increase in image quality, reduction in processing amount, reduction in circuit scale, appropriate selection of an element or an operation, etc. It is to be noted that the present disclosure may encompass possible configurations or methods which can contribute to advantages other than the above advantages.

### [Solution to Problem]

For example, an encoder according to one aspect of the present disclosure includes memory and circuitry coupled to the memory. Using the memory, the circuitry: encodes at least one fundamental image for use in displaying a video; and encodes, as information corresponding to each of images of the video, geometric information indicating geometric attributes within a region including a face of a person.

Each of embodiments, or each of part of constituent elements and methods in the present disclosure enables, for example, at least one of the following: improvement in coding efficiency, enhancement in image quality, reduction in processing amount of encoding/decoding, reduction in circuit scale, improvement in processing speed of encoding/decoding, etc. Alternatively, each of embodiments, or each of part of constituent elements and methods in the present disclosure enables, in encoding and decoding, appropriate selection of an element or an operation. The element is, for example, a filter, a block, a size, a motion vector, a reference picture, or a reference block. It is to be noted that the present disclosure includes disclosure regarding configurations and methods which may provide advantages other than the above-described ones. Examples of such configurations and methods include a configuration or method for improving coding efficiency while reducing increase in processing amount.

Additional benefits and advantages according to an aspect of the present disclosure will become apparent from the specification and drawings. The benefits and/or advantages may be individually obtained by the various embodiments and features of the specification and drawings, and not all of which need to be provided in order to obtain one or more of such benefits and/or advantages.

It is to be noted that these general or specific aspects may be implemented using a system, an integrated circuit, a computer program, or a computer readable medium (recording medium) such as a CD-ROM, or any combination of systems, methods, integrated circuits, computer programs, and media.

### [Advantageous Effects of Invention]

A configuration or method according to an aspect of the present disclosure enables, for example, at least one of the following: improvement in coding efficiency, enhancement in image quality, reduction in processing amount, reduction in circuit scale, improvement in processing speed, appropriate selection of an element or an operation, etc. It is to be noted that the configuration or method according to an aspect of the present disclosure may provide advantages other than the above-described ones.

### [Brief Description of Drawings]

[FIG. 1]

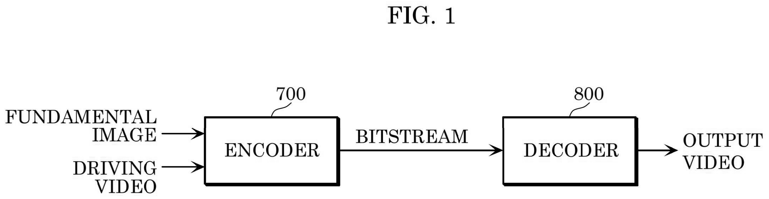

   FIG. 1 is a block diagram illustrating the configuration of an encoding and decoding system according to a reference example.
[FIG. 2]

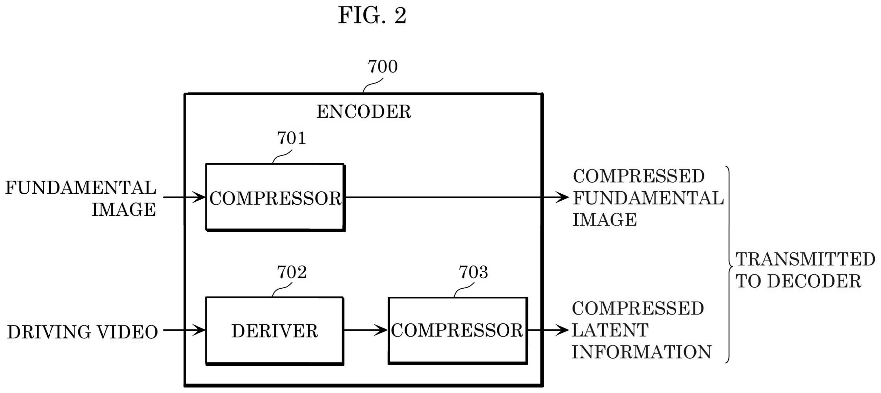

   FIG. 2 is a block diagram illustrating the configuration of an encoder according to the reference example.
[FIG. 3]

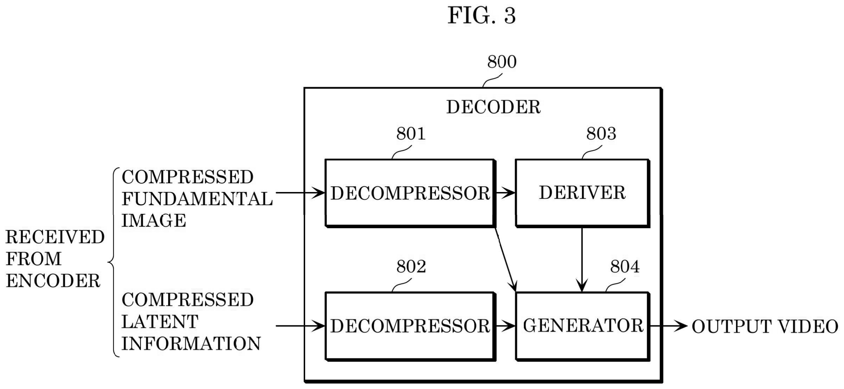

   FIG. 3 is a block diagram illustrating the configuration of a decoder according to the reference example.
[FIG. 4]

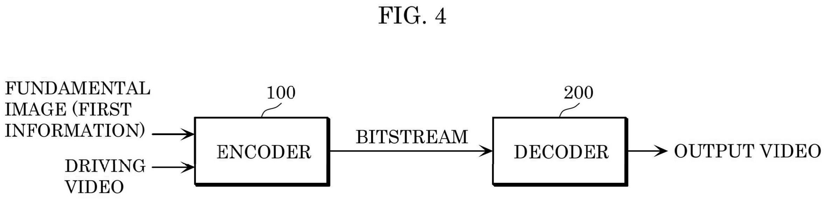

   FIG. 4 is a block diagram illustrating a configuration example of an encoding and decoding system according to an embodiment.
[FIG. 5]

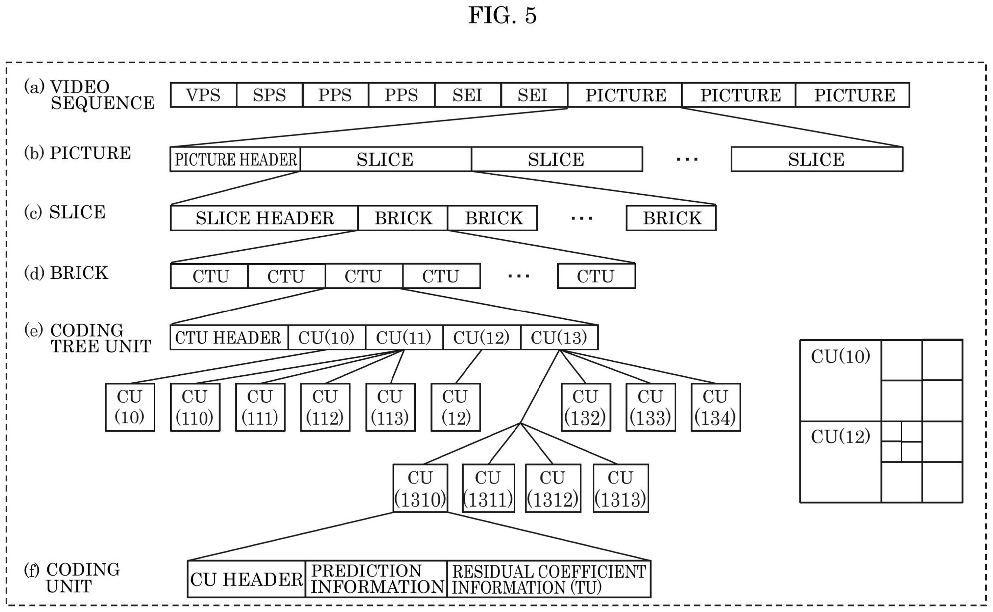

   FIG. 5 is a diagram illustrating one example of the layer structure of data in a stream.
[FIG. 6]

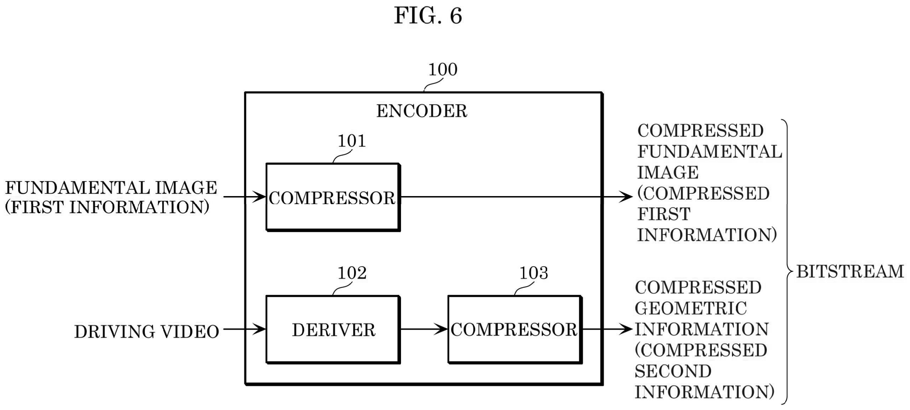

   FIG. 6 is a block diagram illustrating a configuration example of an encoder according to the embodiment.
[FIG. 7]

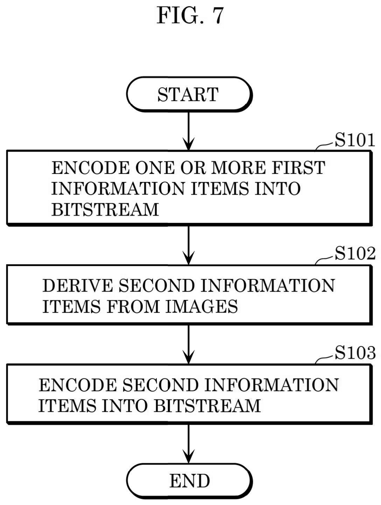

   FIG. 7 is a flow chart illustrating an example of an encoding process according to the embodiment.
[FIG. 8]

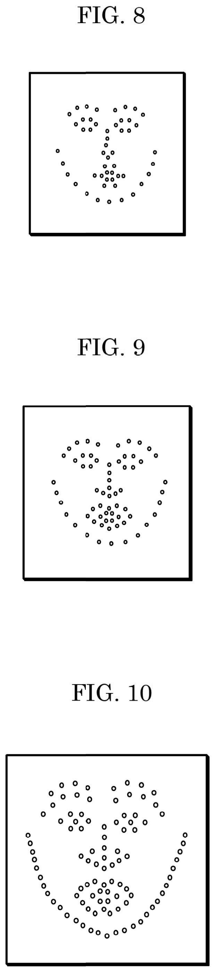

   FIG. 8 is an example of facial landmarks derived from an image.
[FIG. 9]
   FIG. 9 is another example of facial landmarks derived from an image.
[FIG. 10]
   FIG. 10 is yet another example of facial landmarks derived from an image.
[FIG. 11]

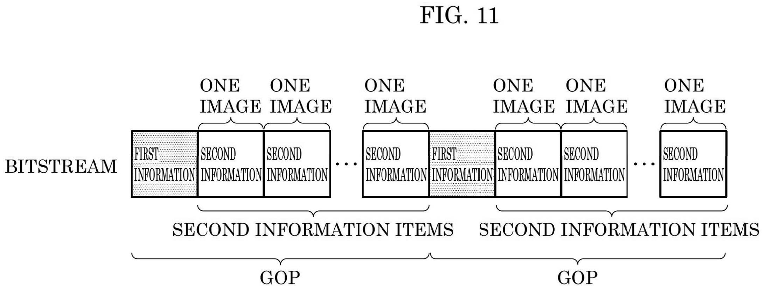

   FIG. 11 is a diagram illustrating an example of a bitstream layout candidate.
[FIG. 12]

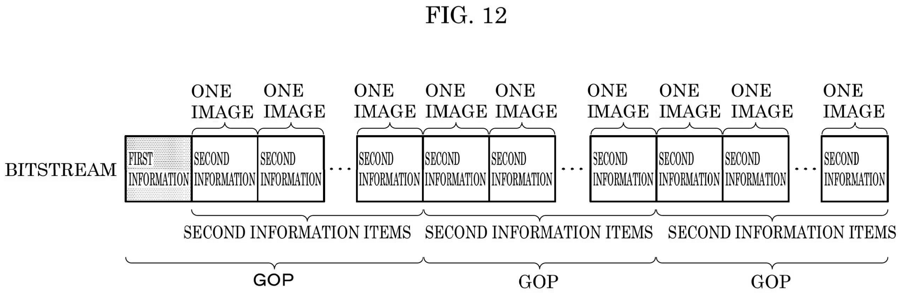

   FIG. 12 is a diagram illustrating another example of a bitstream layout candidate.
[FIG. 13]

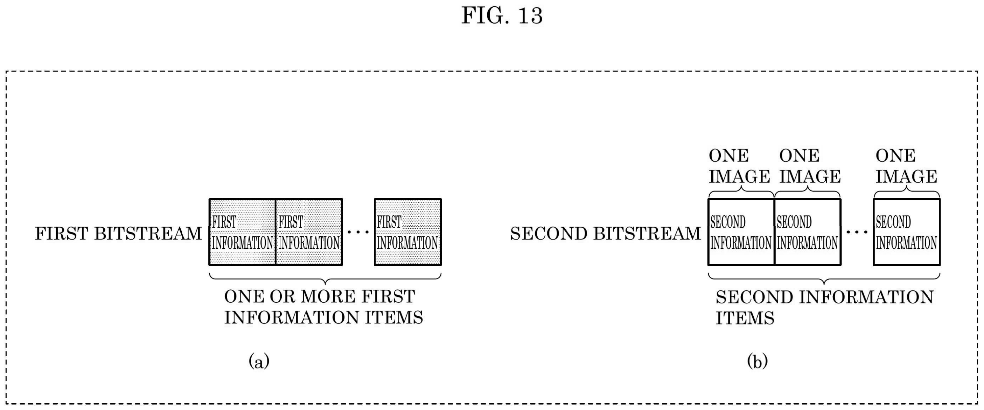

   FIG. 13 is a diagram illustrating yet another example of a bitstream layout candidate.
[FIG. 14]

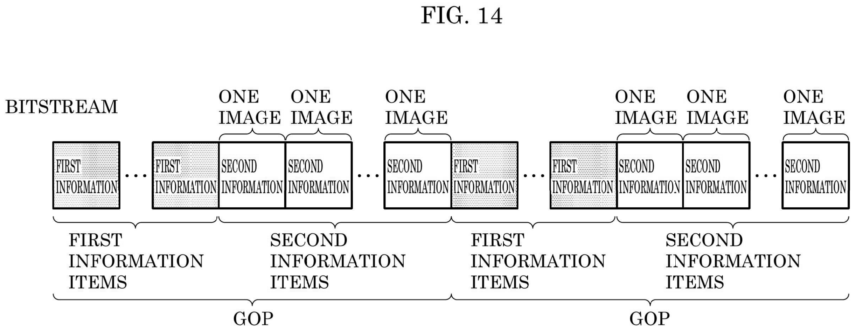

   FIG. 14 is a diagram illustrating yet another example of a bitstream layout candidate.
[FIG. 15]

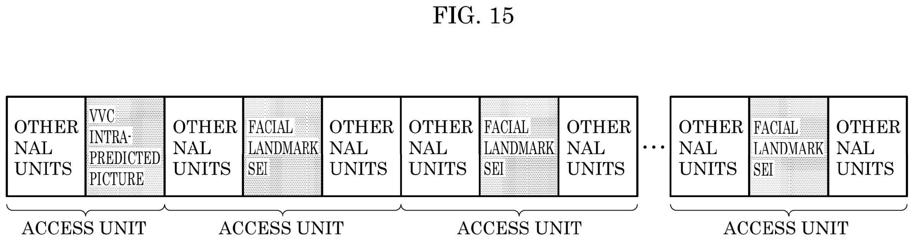

   FIG. 15 is a diagram illustrating an example of a bitstream layout candidate compliant with VVC.
[FIG. 16]

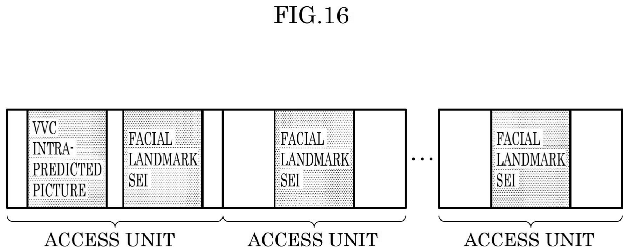

   FIG. 16 is a diagram illustrating another example of a bitstream layout candidate compliant with VVC.
[FIG. 17]

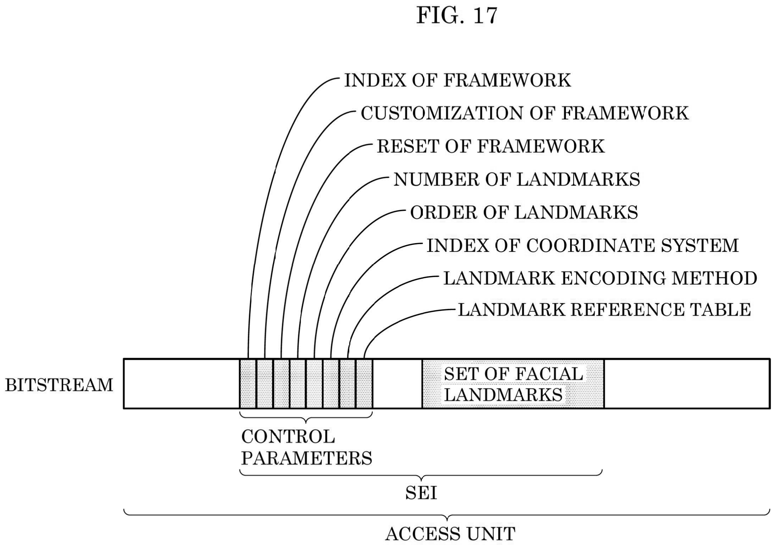

   FIG. 17 is a diagram illustrating an example of a bitstream layout candidate including control parameters.
[FIG. 18]

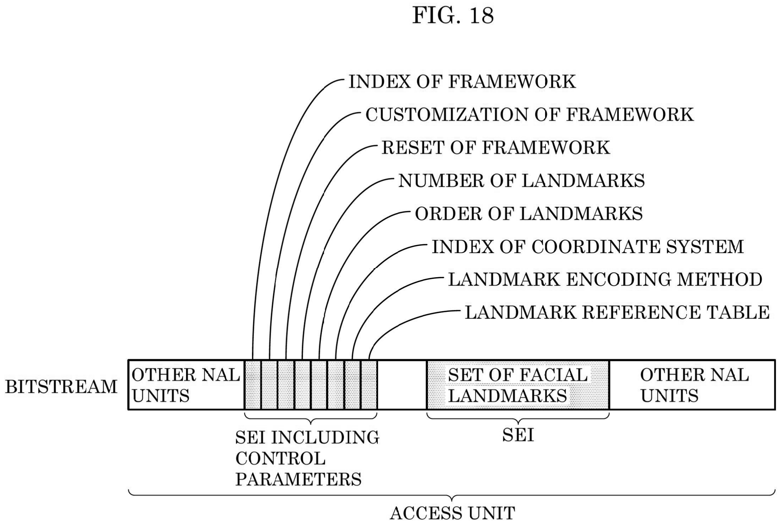

   FIG. 18 is a diagram illustrating another example of a bitstream layout candidate including control parameters.
[FIG. 19]

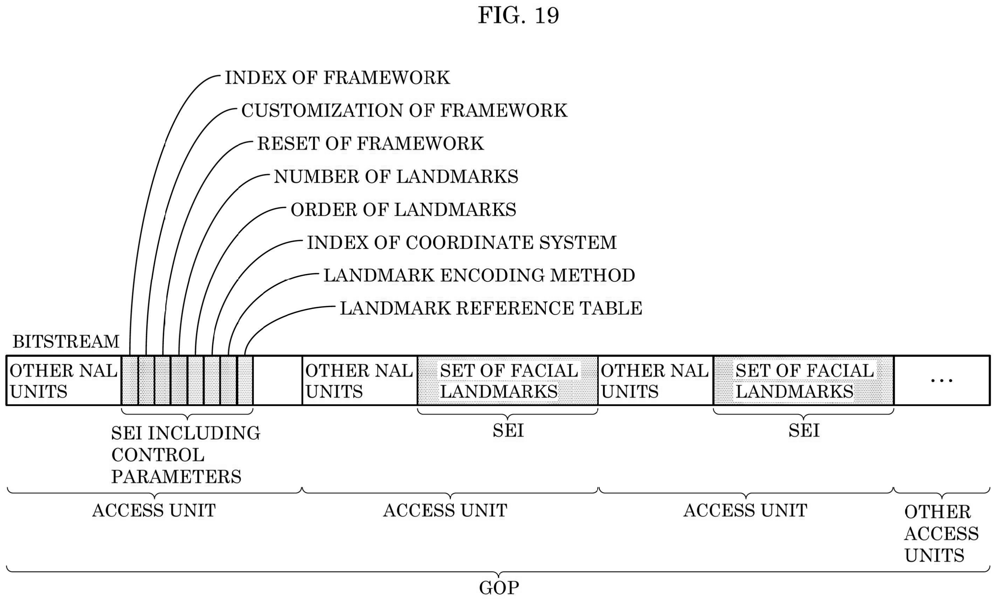

   FIG. 19 is a diagram illustrating yet another example of a bitstream layout candidate including control parameters.
[FIG. 20]

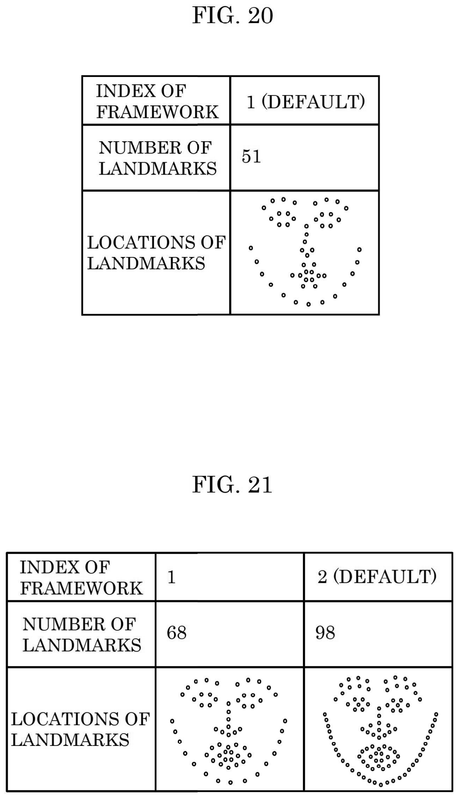

   FIG. 20 is a diagram illustrating an example in which one framework is set.
[FIG. 21]
   FIG. 21 is a diagram illustrating an example in which two frameworks are set.
[FIG. 22]

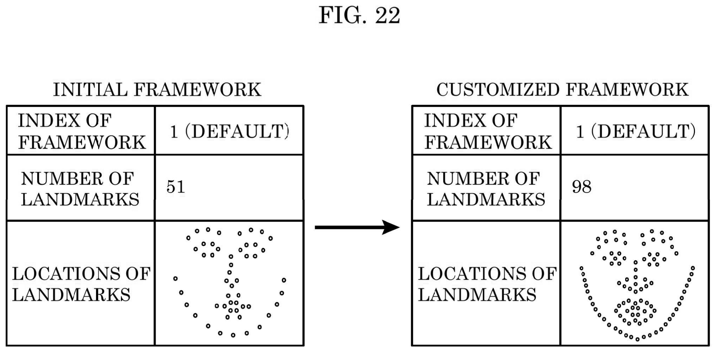

   FIG. 22 is a diagram illustrating an example in which a framework is customized from an initial framework.
[FIG. 23]

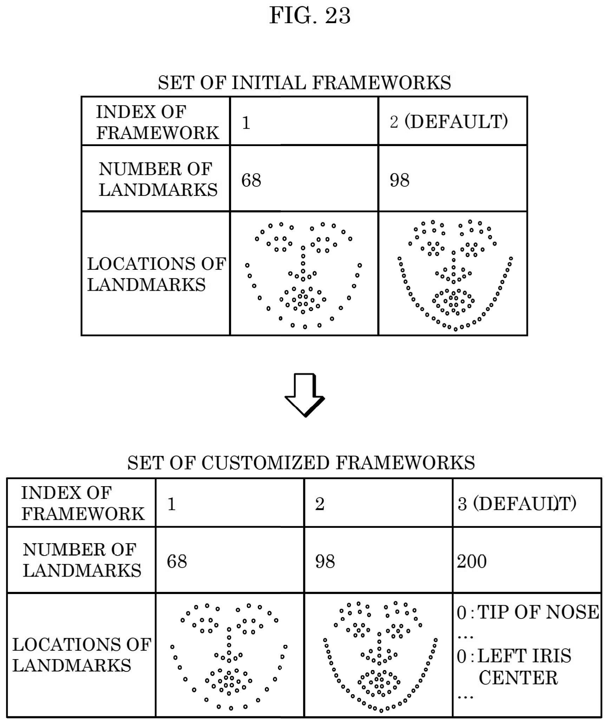

   FIG. 23 is a diagram illustrating an example in which the customized framework is added to a set of frameworks.
[FIG. 24]

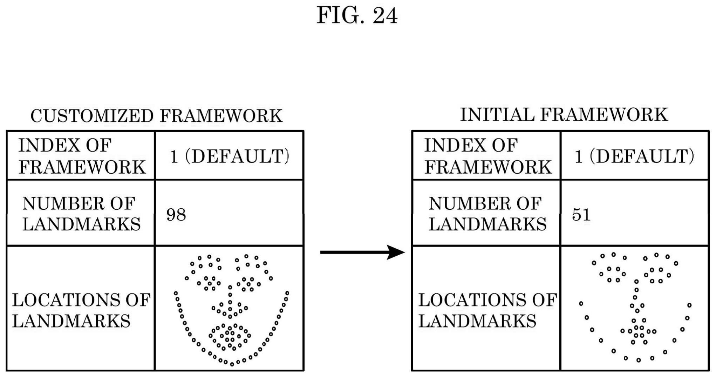

   FIG. 24 is a diagram illustrating an example in which the customized framework is reset back to the initial framework.
[FIG. 25]

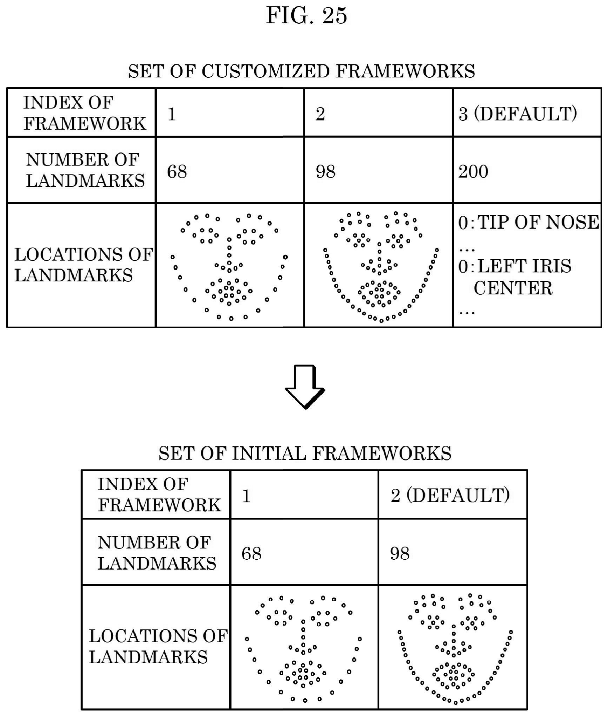

   FIG. 25 is a diagram illustrating an example in which a set of customized frameworks is reset back to a set of initial frameworks.
[FIG. 26]

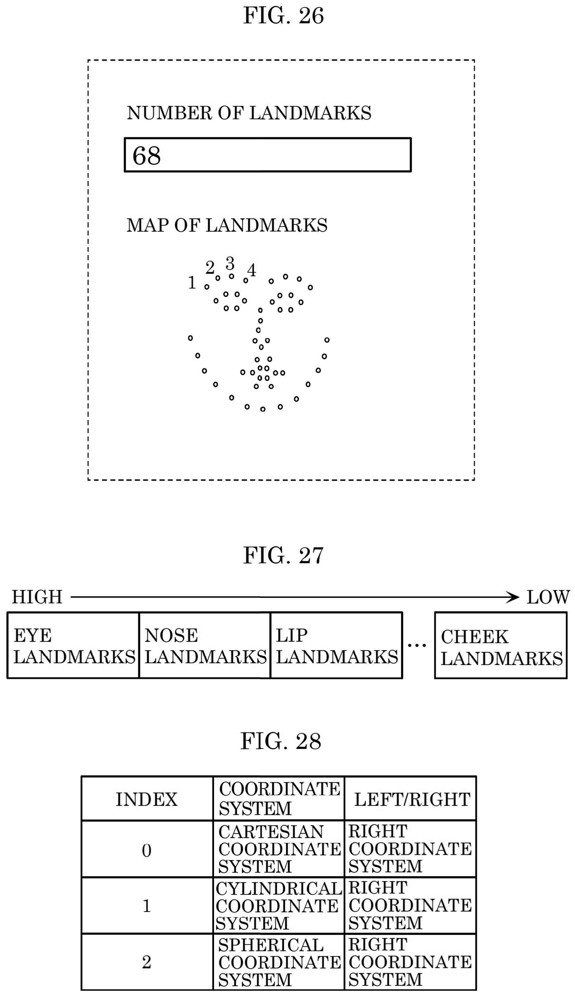

   FIG. 26 is a diagram illustrating an example of a user interface to allow a user to select the number of landmarks.
[FIG. 27]
   FIG. 27 is a diagram illustrating an example of the order of landmarks.
[FIG. 28]
   FIG. 28 is a diagram illustrating an example of coordinate systems.
[FIG. 29]

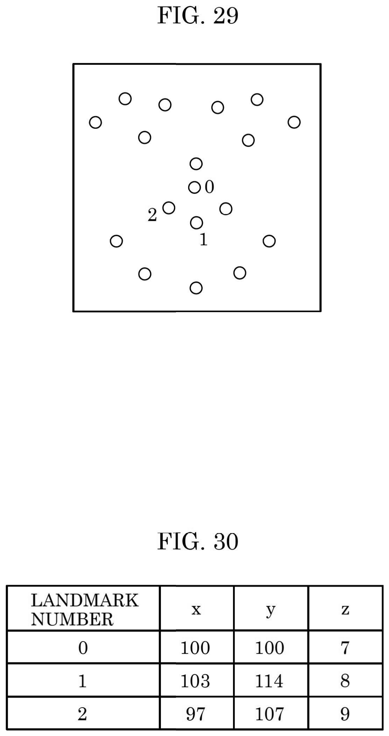

   FIG. 29 is a diagram illustrating a visual example of landmarks to which absolute encoding is applied.
[FIG. 30]
   FIG. 30 is a diagram illustrating an example of information corresponding to landmarks to which absolute encoding is applied.
[FIG. 31]

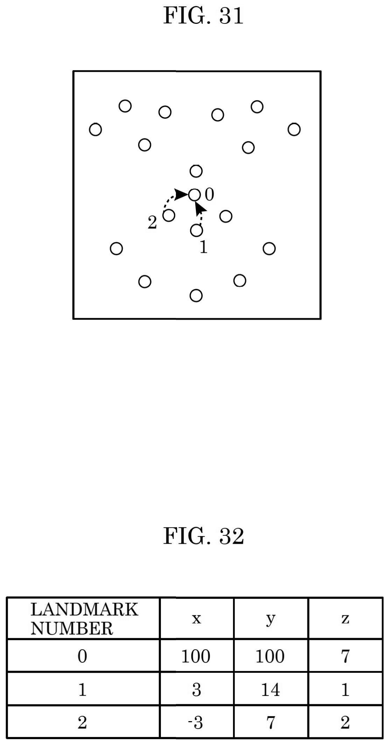

   FIG. 31 is a diagram illustrating a visual example of landmarks to which delta encoding is applied.
[FIG. 32]
   FIG. 32 is a diagram illustrating an example of information to be encoded in the example of FIG. 31.
[FIG. 33]

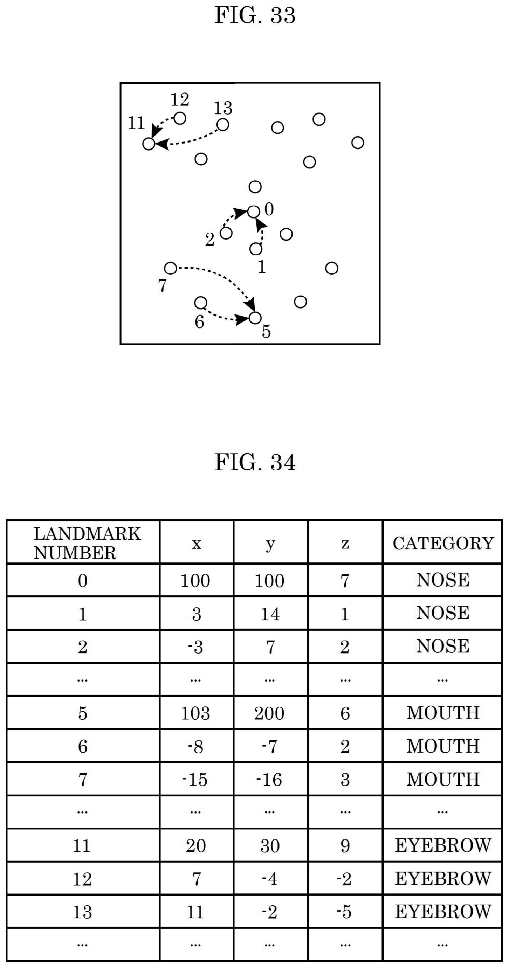

   FIG. 33 is a diagram illustrating another visual example of landmarks to which delta encoding is applied.
[FIG. 34]
   FIG. 34 is a diagram illustrating another example of information to be encoded in the example of FIG. 33.
[FIG. 35]

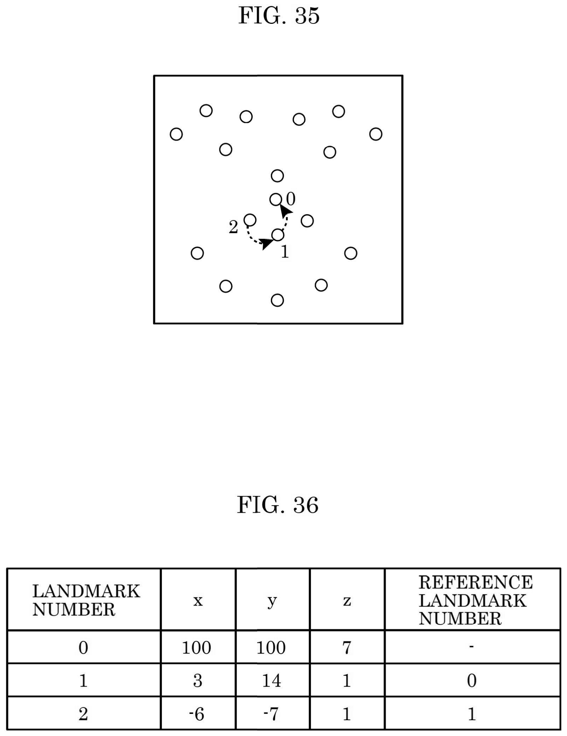

   FIG. 35 is a diagram illustrating yet another visual example of landmarks to which delta encoding is applied.
[FIG. 36]
   FIG. 36 is a diagram illustrating an example of information to be encoded in the example of FIG. 35.
[FIG. 37]

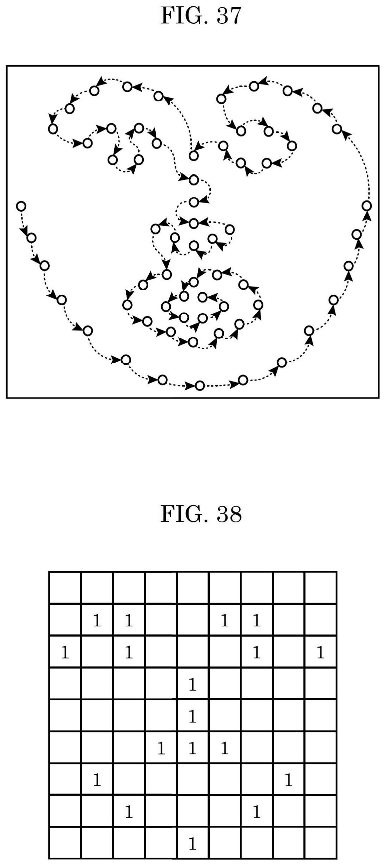

   FIG. 37 is a diagram illustrating yet another visual example of landmarks to which delta encoding is applied.
[FIG. 38]
   FIG. 38 is a diagram illustrating an example of a sparse matrix represented by projecting locations of landmarks onto a two-dimensional plane.
[FIG. 39]

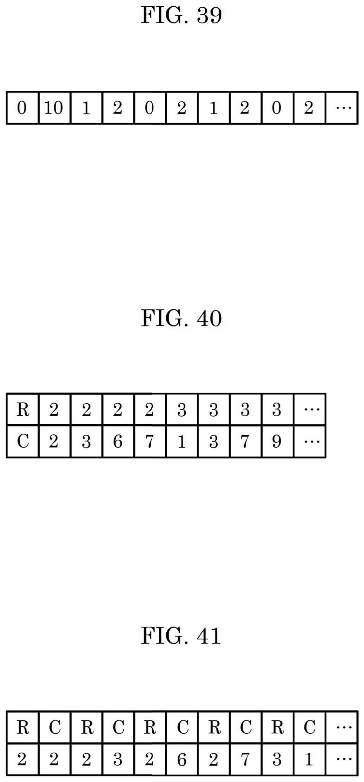

   FIG. 39 is a diagram illustrating an example of run-length encoding.
[FIG. 40]
   FIG. 40 is a diagram illustrating an example of two-dimensional sparse array representation.
[FIG. 41]
   FIG. 41 is a diagram illustrating an example of one-dimensional sparse array representation.
[FIG. 42]

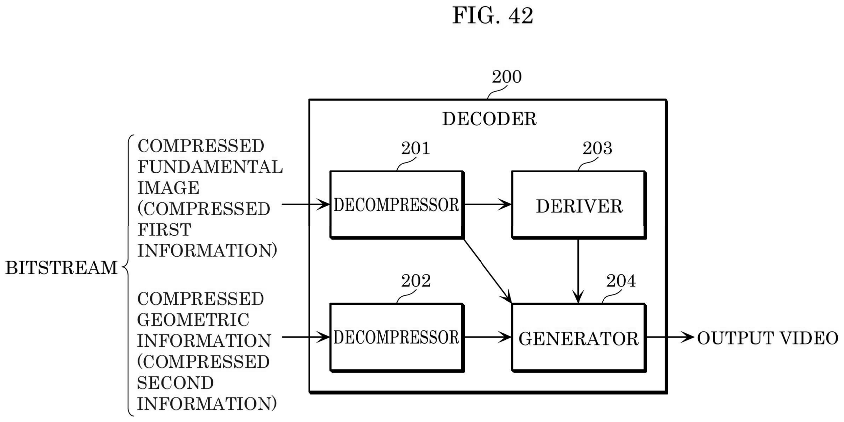

   FIG. 42 is a block diagram illustrating a configuration example of a decoder according to the embodiment.
[FIG. 43]

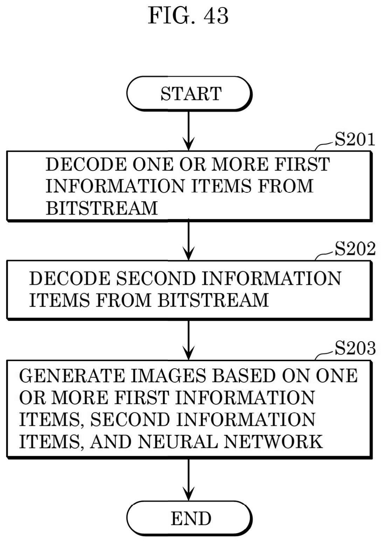

   FIG. 43 is a flow chart illustrating an example of a decoding process according to the embodiment.
[FIG. 44]

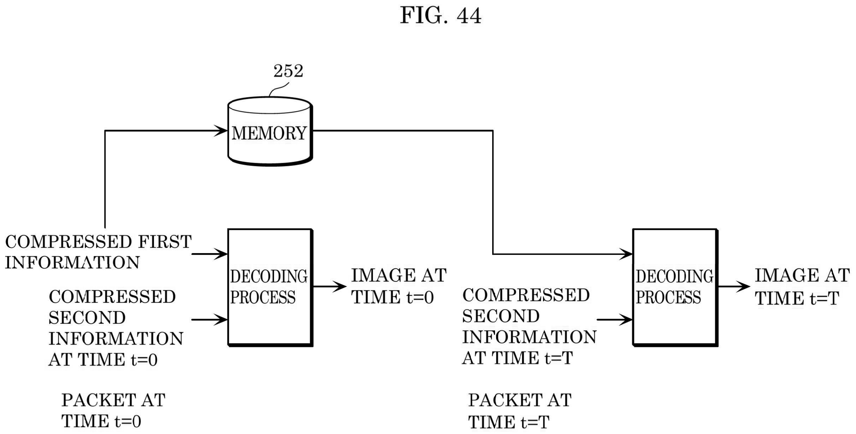

   FIG. 44 is a concept diagram illustrating a decoding process at each time instance.
[FIG. 45]

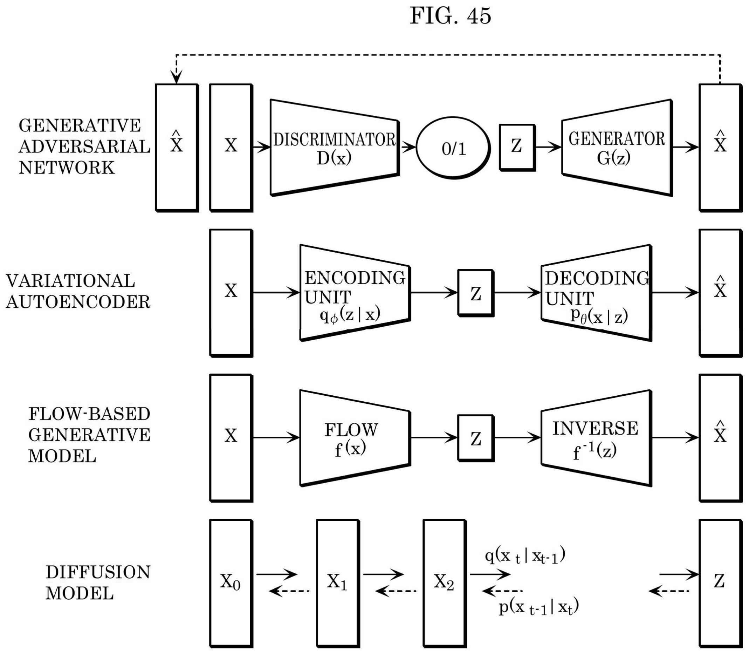

   FIG. 45 is a diagram illustrating examples of different neural networks for generating multiple images.
[FIG. 46]

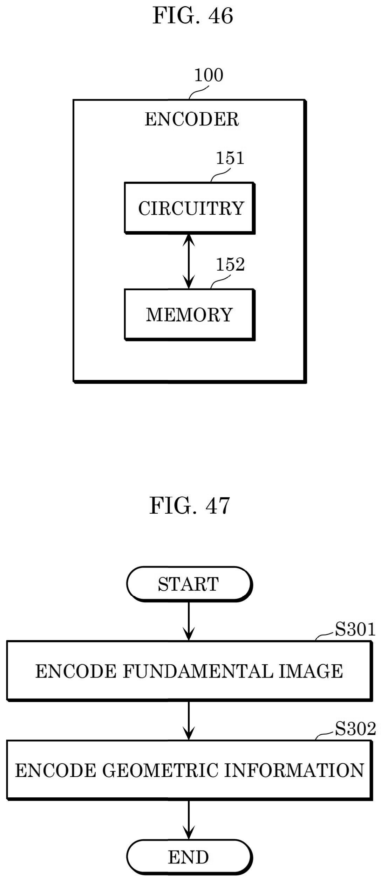

   FIG. 46 is a block diagram illustrating an implementation example of an encoder.
[FIG. 47]
   FIG. 47 is a flow chart illustrating an example of a basic operation performed by the encoder.
[FIG. 48]

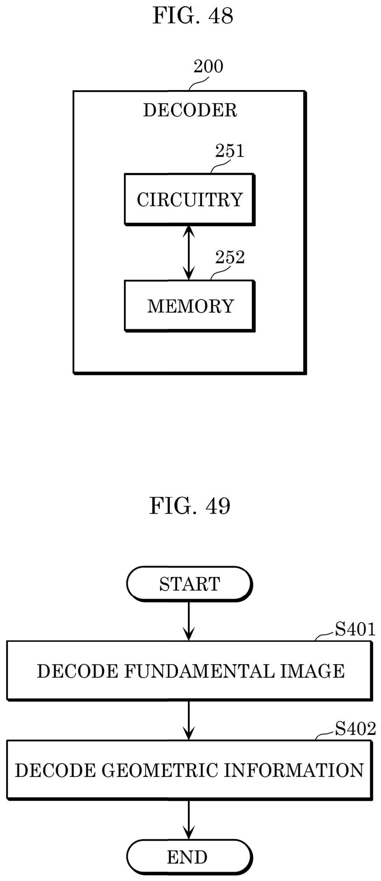

   FIG. 48 is a block diagram illustrating an implementation example of a decoder.
[FIG. 49]
   FIG. 49 is a flow chart illustrating an example of a basic operation performed by the decoder.
[FIG. 50]

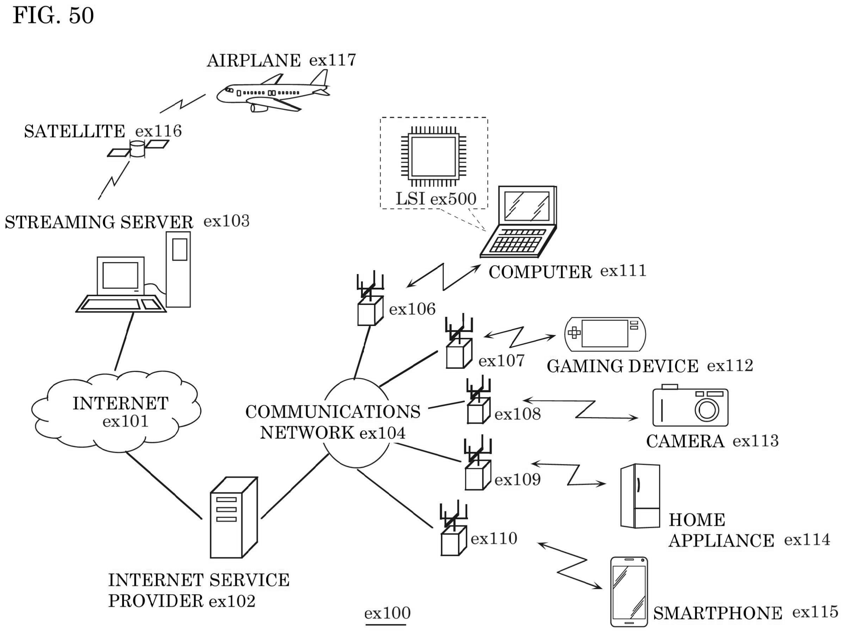

   FIG. 50 is a diagram illustrating an overall configuration of a content providing system for implementing a content distribution service.
[FIG. 51]

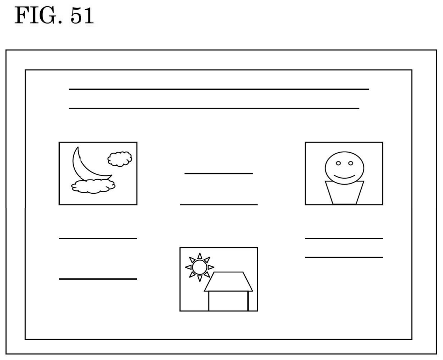

   FIG. 51 is a diagram illustrating an example of a display screen of a web page.
[FIG. 52]

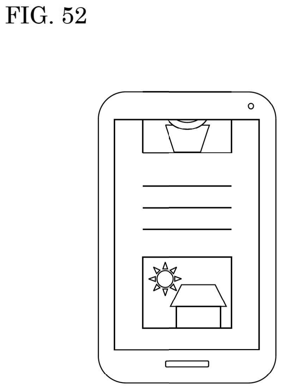

   FIG. 52 is a diagram illustrating an example of a display screen of a web page.
[FIG. 53]

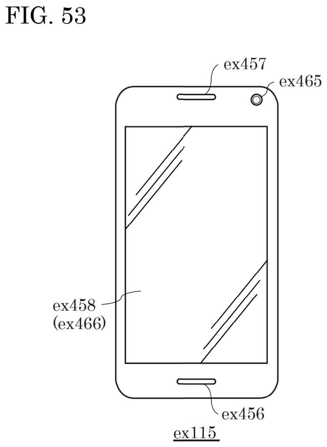

   FIG. 53 is a diagram illustrating one example of a smartphone.
[FIG. 54]

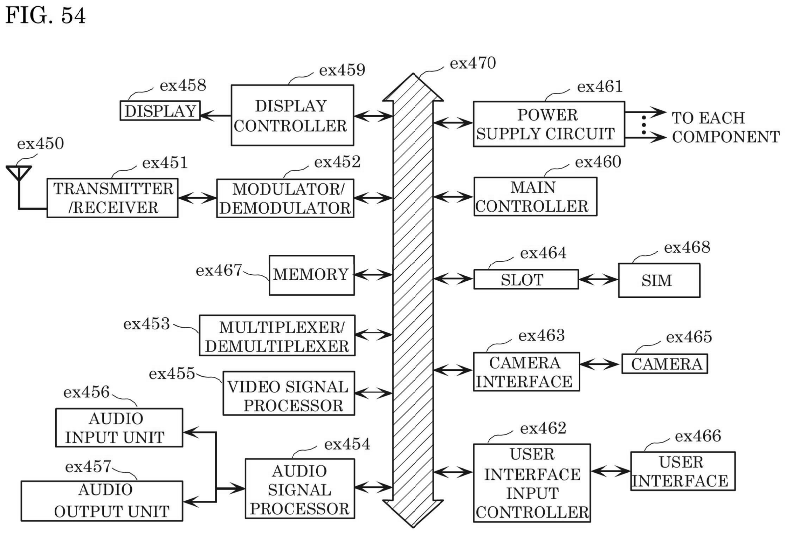

   FIG. 54 is a block diagram illustrating an example of a configuration of a smartphone.

### [Description of Embodiments]

### [Introduction]

The present disclosure relates to an encoder, a decoder, an encoding method, a decoding method, etc. for signaling interpretable facial representations. In the present disclosure, face re-enactment refers to the process of mapping pose and expressions to a facial image of a target person, while simultaneously ensuring that the identity of the target person is being preserved. Face re-enactment techniques can be used in a wide variety of applications ranging from video conferencing to the entertainment sector.

The present disclosure can be used in any multimedia data coding regarding facial re-enactment techniques that seek to enhance the photo-realistic aspect of generated output videos.

For example, in video conferencing applications, a driving video comprising one or more frames of a user is first captured by the encoder and subsequently transmitted to the decoder which is the recipient for real-time communication to reconstruct and display the captured video. The user can choose to be represented through live feed from a camera, or by one or more pre-configured cartoonized avatars, or by one or more pre-set images containing a face.

Additionally, face re-enactment techniques have been widely adopted within the entertainment industry, such as the production of advertisements, editing of movie scenes and enhancements to music videos. In these applications, expressions and pose in realistic videos of a person are synthesized with a target face, while ensuring that the target's identity and appearance is preserved. Current works strive to improve these techniques to handle both same-identity video reconstruction in which the driving video and the target face belong to the same person and cross-identity video re-enactment in which the driving video and the target face belong to different persons.

With rising popularity and increased usage of various social media applications, face re-enactment techniques provide users with flexibility, convenience, and ease in generating uniquely customized representations of themselves and in symbolizing their feelings and personalities. For example, the driving video may be a real-time video, or may be a pre-recorded video. In such scenarios, current works have proposed various face re-enactment techniques.

FIG. 1 is a block diagram illustrating the configuration of an encoding and decoding system according to a reference example. For example, the encoding and decoding system includes encoder 700 and decoder 800. First, encoder 700 accepts a driving video and fundamental images of a target person, and encodes and compresses them into one or more bitstreams. Subsequently, encoder 700 transmits the compressed bitstreams to decoder 800 through a transmission channel. Finally, decoder 800 reconstructs the output video from the received bitstreams.

For example, the fundamental image represents visual features on the display of the output video, and the driving video serves as a motion provider for the visual features on the display of the output video.

FIG. 2 is a block diagram illustrating the configuration of encoder 700 according to the reference example. In this example, encoder 700 includes compressor 701, deriver 702, and compressor 703.

First, compressor 701 encodes at least one fundamental image using video compression techniques. The fundamental image may be a frame of a driving video, a pre-obtained image containing the face of a target person, or an avatar.

Subsequently, deriver 702 feeds multiple frames of the driving video into a neural network to derive latent information represented by a latent space. Compressor 703 compresses the latent information into one or more bitstreams using methods such as entropy encoding. The latent information is uniquely different for each implementation, and is not human-readable or easily understood by humans. Finally, the bitstreams are transmitted to decoder 800 via a transmission channel.

FIG. 3 is a block diagram illustrating the configuration of decoder 800 according to the reference example. In this example, decoder 800 includes decompressor 801, decompressor 802, deriver 803, and generator 804.

First, decompressor 801 decodes and reconstructs at least one fundamental image from the bitstream. Thereafter, decompressor 801 feeds the fundamental image to deriver 803 corresponding to deriver 702 of encoder 700. Deriver 803 derives the latent information in the latent space from the fundamental image. Subsequently, decompressor 802 decodes and reconstructs the latent information.

The latent information represents the distribution of features generated using the neural network in the latent space. It is to be noted that this latent information is used in the neural network. It is not easily understood and interpreted by humans, and it corresponds to a unique representation of transformed data for each type of neural network.

Thereafter, generator 804 generates an output video from multiple latent information items using the neural network. For example, a generative adversarial network may be used when the output video is generated. Generator 804 also may use the fundamental image to render the output video.

Unfortunately, there are various implementations of face re-enactment techniques that are based on vastly differing formats. As such, one implementation of face re-enactment that is based on a certain representation is not able to decode another representation that is based on a different implementation. This is because each representation is determined by a unique configuration of the encoder and decoder neural networks, so other neural network implementations are incompatible and cannot be used.

Without a common standard, methods adopted by one company may not be able to effectively interpret and decode the compressed data received and transmitted from another company that adopts a different method. In other words, interoperation of face re-enactment is difficult among the different systems.

The present disclosure seeks to bridge this gap by retrieving interpretable face representations from frames in the driving video. These representations are disentangled from identity information and contain details about geometric attributes such as pose or subtle facial movements. With interpretable facial attributes, it allows for easier understanding of attributes used in generating the output videos.

Accordingly, it is possible to easily modify these attributes and allow for controllable generation of pose and subtle facial movements in output videos. Moreover, these representations are now independent of the configuration of the encoder and decoder neural networks, so other neural network implementations can be used depending on the system.

For example, the interpretable geometric attributes are transmitted for each frame. The unique identity information can be universally reused when the entire video is generated. In doing so, minimal details are transmitted per frame. In this manner, the volume of data transferred between parties is significantly reduced, and hence the required bandwidth is reduced.

By leveraging on interpretable facial representations, the present disclosure can enhance compatibility with any type of geometric attributes. In this manner, sufficient information to generate a presentable output can be provided for neural network based real-time face generation. Then, the interoperation is allowed among the different systems.

In other words, the present disclosure provides an interpretable representation of the face which can be used in neural network based real-time face generation. This allows compatibility with any type of geometric attributes while ensuring that output videos appear natural without distortions. Users may also be accorded flexibility in adjusting pose or facial attributes of rendered videos.

Specifically, an encoder of Example 1 is an encoder including memory and circuitry coupled to the memory. Using the memory, the circuitry: encodes at least one fundamental image for use in displaying a video; and encodes, as information corresponding to each of images of the video, geometric information indicating geometric attributes within a region including a face of a person.

With this, it may be possible to encode the geometric information instead of each image itself of a video. Accordingly, it may be possible to reduce the code amount. Moreover, the geometric attributes can be assumed to be recognizable in various environments. Accordingly, it may be possible to enhance the versatility by using the geometric attributes.

Moreover, an encoder of Example 2 may be the encoder of Example 1, in which the geometric information indicates, as the geometric attributes, locations of feature points within the region including the face of the person.

With this, it may be possible to encode the geometric information indicating, as the geometric attribute, the location of each feature point within the region including the face of the person, instead of an image itself. Accordingly, it may be possible to reduce the code amount. Moreover, the locations of feature points can be assumed to be recognizable in various environments. Accordingly, it may be possible to enhance the versatility by using the locations of the feature points.

Moreover, an encoder of Example 3 may be the encoder of Example 2, in which the geometric information indicates the locations of the feature points using three-dimensional coordinate values.

With this, it may be possible to encode the geometric information representing the locations of feature points in a three-dimensional space. Accordingly, it may be possible to relatively richly express the region including the face of a person.

Moreover, an encoder of Example 4 may be the encoder of Example 2, in which the geometric information indicates the locations of the feature points using two-dimensional coordinate values.

With this, it may be possible to encode the geometric information representing the locations of feature points in a two-dimensional space. Accordingly, it may be possible to relatively simply express the region including the face of a person.

Moreover, an encoder of Example 5 may be any of the encoders of Examples 1 to 4, in which the circuitry: encodes the at least one fundamental image into a first bitstream; and encodes the geometric information into a second bitstream different from the first bitstream.

With this, it may be possible to relatively easily separate the encoding of the fundamental image and the encoding of the geometric information. It also may be possible to separately manage the fundamental image and the geometric information.

Moreover, an encoder of Example 6 may be any of the encoders of Examples 1 to 4, in which the circuitry encodes the at least one fundamental image and the geometric information into a first bitstream, the geometric information is included in a header of the first bitstream, and the header is a region where one or more parameters for use in encoding are described, the header including supplemental enhancement information (SEI).

With this, it may be possible to relatively easily integrate the encoding of the fundamental image and the encoding of the geometric information. It also may be possible to manage the fundamental image and the geometric information together.

Moreover, an encoder of Example 7 may be any of the encoders of Examples 1 to 6, in which the circuitry encodes the at least one fundamental image as at least one beginning image of the video in a given period.

With this, it may be possible to update the fundamental image for every given period. Accordingly, it may be possible to reduce the degradation of the image quality.

Moreover, an encoder of Example 8 may be any of the encoders of Examples 1 to 7, in which the circuitry encodes the at least one fundamental image as at least one beginning image in an image sequence of the video.

With this, it may be possible to apply the same fundamental image to the image sequence of the video. Accordingly, it may be possible to reduce the complexity of the processing and also reduce the code amount.

Moreover, an encoder of Example 9 may be any of the encoders of Examples 1 to 8, in which the circuitry encodes the at least one fundamental image as at least one beginning image in a group of pictures (GOP) of the video.

With this, it may be possible to update the fundamental image for every GOP. Accordingly, it may be possible to reduce the degradation of the image quality.

Moreover, an encoder of Example 10 may be any of the encoders of Examples 1 to 9, in which the circuitry encodes the at least one fundamental image using intra prediction.

With this, it may be possible to keep the fundamental image quality relatively high. Accordingly, it may be possible to reduce the degradation of the image quality of the entire video.

Moreover, an encoder of Example 11 may be any of the encoders of Examples 1 to 10, in which the circuitry generates the at least one fundamental image and the geometric information from a video for the person.

With this, it may be possible to generate the fundamental image and the geometric information from one or more videos for the same person. Accordingly, it may be possible to relatively efficiently generate the fundamental image and the geometric information.

Moreover, an encoder of Example 12 may be any of the encoders of Examples 1 to 10, in which the circuitry: generates the at least one fundamental image from a video for a first person different from the person; and generates the geometric information from a video for a second person who is the person.

With this, it may be possible to generate the fundamental image and the geometric information from videos for different persons. Accordingly, it may be possible to relatively flexibly generate the fundamental image and the geometric information.

Moreover, an encoder of Example 13 may be any of the encoders of Examples 1 to 10 and 12, in which each of the at least one fundamental image is an image for use instead of the person in displaying the video.

With this, it may be possible to apply, to displaying of a video, an image different from an image for the person related to the geometric information. Accordingly, it may be possible to more flexibly display a video.

Moreover, an encoder of Example 14 may be any of the encoders of Examples 1 to 13, in which the circuitry: encodes the at least one fundamental image as at least one image of the video; and encodes an image same as any of the at least one fundamental image as each of one or more remaining images of the video.

With this, it may be possible to encode the fundamental image as an image of the video. It also may be possible to encode the image same as the fundamental image as another image of the video. With this, it may be possible to use the encoding scheme of the video. It also may be possible to display the image same as the fundamental image even when the processing of the geometric information is difficult.

Moreover, an encoder of Example 15 may be any of the encoders of Examples 1 to 13, in which the circuitry: encodes the at least one fundamental image as at least one image of the video; and encodes a substitute image as each of one or more remaining images of the video.

With this, it may be possible to encode the fundamental image as an image of the video. It also may be possible to encode the substitute image as another image of the video. With this, it may be possible to use the encoding scheme of the video. It also may be possible to simplify the processing depending on the substitute image.

Moreover, an encoder of Example 16 may be the encoder of Example 15, in which the circuitry encodes, into a header, a signal indicating that the substitute image is used, and the header is a region where one or more parameters for use in encoding are described, the header including supplemental enhancement information (SEI).

With this, it may be possible to specify that the substitute image is used. Accordingly, it may be possible to prevent a substitute image not to be displayed from being displayed.

Moreover, an encoder of Example 17 may be any of the encoders of Examples 2 to 4, in which the circuitry encodes, into a header, a signal for controlling a specifying method of specifying the feature points, and the header is a region where one or more parameters for use in encoding are described, the header including supplemental enhancement information (SEI).

With this, it may be possible to control the specifying method of specifying the feature points. Accordingly, it may be possible to relatively flexibly specify the feature points.

Moreover, an encoder of Example 18 may be the encoder of Example 17, in which the signal specifies a total number of the feature points.

With this, it may be possible to adaptively specify the number of the feature points. Accordingly, it may be possible to specify the number of the feature points based on the processing amount, the code amount, the image quality, etc.

Moreover, an encoder of Example 19 may be the encoder of Example 17 or 18, in which the signal specifies a coordinate system for defining the locations of the feature points.

With this, it may be possible to adaptively specify the coordinate system for defining the location of each of the feature points. Accordingly, it may be possible to efficiently specify the coordinate system for indicating each of the locations.

Moreover, an encoder of Example 20 may be any of the encoders of Examples 17 to 19, in which the signal specifies an order of the feature points.

With this, it may be possible to adaptively specify the order of the feature points. Accordingly, it may be possible to specify the order of the feature points based on the processing amount, the code amount, the image quality, etc.

Moreover, an encoder of Example 21 may be any of the encoders of Examples 17 to 20, in which the signal indicates an identifier for identifying the specifying method from specifying methods.

With this, it may be possible to adaptively select the specifying method from among specifying methods. Accordingly, it may be possible to select the specifying method from among specifying methods based on the processing amount, the code amount, the image quality, etc. It also may be possible to adaptively and efficiently switch between the specifying methods.

Moreover, an encoder of Example 22 may be any of the encoders of Examples 2 to 4 and 17 to 21, in which the locations of the feature points are represented by a difference from a reference location.

With this, it may be possible to reduce the code amount of the location of the feature point. Accordingly, it may be possible to reduce the code amount of the geometric information, thereby allowing for the reduction in the code amount of the video.

Moreover, an encoder of Example 23 may be the encoder of Example 22, in which for the feature points, one location is defined as the reference location.

With this, it may be possible to reduce the code amount of the location of the feature point. Accordingly, it may be possible to reduce the code amount of the geometric information. It also may be possible to reduce the complexity of the processing and the increase in processing amount.

Moreover, an encoder of Example 24 may be the encoder of Example 22, in which the feature points are categorized into groups, and for each of the groups, one location is defined as the reference location.

With this, it may be possible to adaptively define the reference location according to the groups. It also may be possible to reduce the code amount of the location of the feature point using the reference location. Accordingly, it may be possible to reduce the code amount of the geometric information.

Moreover, an encoder of Example 25 may be the encoder of Example 22, in which the reference location is a location of a feature point among the feature points that is immediately before a current feature point in an encoding order.

With this, it may be possible to reduce the code amount of the location of the feature point using a distance between the feature points. Accordingly, it may be possible to reduce the code amount of the geometric information.

Moreover, an encoder of Example 26 may be the encoder of Example 2 or 4, in which the locations of the feature points are represented by locations of points projected onto a two-dimensional plane from the feature points.

With this, it may be possible to represent the locations of the feature points as two-dimensional coordinate values. With this, it may be possible to reduce the code amount of the location of the feature point. Accordingly, it may be possible to reduce the code amount of the geometric information.

Moreover, a decoder of Example 27 is a decoder including memory and circuitry coupled to the memory. Using the memory, the circuitry: decodes at least one fundamental image for use in displaying a video; and decodes, as information corresponding to each of images of the video, geometric information indicating geometric attributes within a region including a face of a person.

With this, it may be possible to decode the geometric information instead of each image itself of a video. Accordingly, it may be possible to reduce the code amount. Moreover, the geometric attributes can be assumed to be recognizable in various environments. Accordingly, it may be possible to enhance the versatility by using the geometric attributes.

Moreover, a decoder of Example 28 may be the decoder of Example 27, in which the geometric information indicates, as the geometric attributes, locations of feature points within the region including the face of the person.

With this, it may be possible to decode the geometric information indicating, as the geometric attribute, the location of each feature point within the region including the face of the person, instead of an image itself. Accordingly, it may be possible to reduce the code amount. Moreover, the locations of feature points can be assumed to be recognizable in various environments. Accordingly, it may be possible to enhance the versatility by using the locations of the feature points.

Moreover, a decoder of Example 29 may be the decoder of Example 28, in which the geometric information indicates the locations of the feature points using three-dimensional coordinate values.

With this, it may be possible to decode the geometric information representing the locations of feature points in a three-dimensional space. Accordingly, it may be possible to relatively richly express the region including the face of a person.

Moreover, a decoder of Example 30 may be the decoder of Example 28, in which the geometric information indicates the locations of the feature points using two-dimensional coordinate values.

With this, it may be possible to decode the geometric information representing the locations of feature points in a two-dimensional space. Accordingly, it may be possible to relatively simply express the region including the face of a person.

Moreover, a decoder of Example 31 may be any of the decoders of Examples 27 to 30, in which the circuitry: decodes the at least one fundamental image from a first bitstream; and decodes the geometric information from a second bitstream different from the first bitstream.

With this, it may be possible to relatively easily separate the decoding of the fundamental image and the decoding of the geometric information. It also may be possible to separately manage the fundamental image and the geometric information.

Moreover, a decoder of Example 32 may be any of the decoders of Examples 27 to 30, in which the circuitry decodes the at least one fundamental image and the geometric information from a first bitstream, the geometric information is included in a header of the first bitstream, and the header is a region where one or more parameters for use in decoding are described, the header including supplemental enhancement information (SEI).

With this, it may be possible to relatively easily integrate the decoding of the fundamental image and the decoding of the geometric information. It also may be possible to manage the fundamental image and the geometric information together.

Moreover, a decoder of Example 33 may be any of the decoders of Examples 27 to 32, in which the circuitry decodes the at least one fundamental image as at least one beginning image of the video in a given period.

With this, it may be possible to update the fundamental image for every given period. Accordingly, it may be possible to reduce the degradation of the image quality.

Moreover, a decoder of Example 34 may be any of the decoders of Examples 27 to 33, in which the circuitry decodes the at least one fundamental image as at least one beginning image in an image sequence of the video.

With this, it may be possible to apply the same fundamental image to the image sequence of the video. Accordingly, it may be possible to reduce the complexity of the processing and also reduce the code amount.

Moreover, a decoder of Example 35 may be any of the decoders of Examples 27 to 34 in which the circuitry decodes the at least one fundamental image as at least one beginning image in a group of pictures (GOP) of the video.

With this, it may be possible to update the fundamental image for every GOP. Accordingly, it may be possible to reduce the degradation of the image quality.

Moreover, a decoder of Example 36 may be any of the decoders of Examples 27 to 35, in which the circuitry decodes the at least one fundamental image using intra prediction.

With this, it may be possible to keep the fundamental image quality relatively high. Accordingly, it may be possible to reduce the degradation of the image quality of the entire video.

Moreover, a decoder of Example 37 may be any of the decoders of Examples 27 to 36, in which the circuitry generates the at least one fundamental image and the geometric information from a video for the person.

With this, it may be possible to generate the fundamental image and the geometric information from one or more videos for the same person. Accordingly, it may be possible to relatively efficiently generate the fundamental image and the geometric information.

Moreover, a decoder of Example 38 may be any of the decoders of Examples 27 to 36, in which the circuitry: generates the at least one fundamental image from a video for a first person different from the person; and generates the geometric information from a video for a second person who is the person.

With this, it may be possible to generate the fundamental image and the geometric information from videos for different persons. Accordingly, it may be possible to relatively flexibly generate the fundamental image and the geometric information.

Moreover, a decoder of Example 39 may be any of the decoders of Examples 27 to 36 and 38, in which each of the at least one fundamental image is an image for use instead of the person in displaying the video.

With this, it may be possible to apply, to displaying of a video, an image different from an image for the person related to the geometric information. Accordingly, it may be possible to more flexibly display a video.

Moreover, a decoder of Example 40 may be any of the decoders of Examples 27 to 39, in which the circuitry: decodes the at least one fundamental image as at least one image of the video; and decodes an image same as any of the at least one fundamental image as each of one or more remaining images of the video.

With this, it may be possible to decode the fundamental image as an image of the video. It also may be possible to decode the image same as the fundamental image as another image of the video. With this, it may be possible to use the decoding scheme of the video. It also may be possible to display the image same as the fundamental image even when the processing of the geometric information is difficult.

Moreover, a decoder of Example 41 may be any of the decoders of Examples 27 to 39, in which the circuitry: decodes the at least one fundamental image as at least one image of the video; and decodes a substitute image as each of one or more remaining images of the video.

With this, it may be possible to decode the fundamental image as an image of the video. It also may be possible to decode the substitute image as another image of the video. With this, it may be possible to use the decoding scheme of the video. It also may be possible to simplify the processing depending on the substitute image.

Moreover, a decoder of Example 42 may be the decoder of Example 41, in which the circuitry decodes, from a header, a signal indicating that the substitute image is used, and the header is a region where one or more parameters for use in decoding are described, the header including supplemental enhancement information (SEI).

With this, it may be possible to specify that the substitute image is used. Accordingly, it may be possible to prevent a substitute image not to be displayed from being displayed.

Moreover, a decoder of Example 43 may be any of the decoders of Examples 28 to 30, in which the circuitry decodes, from a header, a signal for controlling a specifying method of specifying the feature points, and the header is a region where one or more parameters for use in decoding are described, the header including supplemental enhancement information (SEI).

With this, it may be possible to control the specifying method of specifying the feature points. Accordingly, it may be possible to relatively flexibly specify the feature points.

Moreover, a decoder of Example 44 may be the decoder of Example 43, in which the signal specifies a total number of the feature points.

With this, it may be possible to adaptively specify the number of the feature points. Accordingly, it may be possible to specify the number of the feature points based on the processing amount, the code amount, the image quality, etc.

Moreover, a decoder of Example 45 may be the decoder of Example 43 or 44, in which the signal specifies a coordinate system for defining the locations of the feature points.

With this, it may be possible to adaptively specify the coordinate system for defining the location of each of the feature points. Accordingly, it may be possible to efficiently specify the coordinate system for indicating each of the locations.

Moreover, a decoder of Example 46 may be any of the decoders of Examples 43 to 45, in which the signal specifies an order of the feature points.

With this, it may be possible to adaptively specify the order of the feature points. Accordingly, it may be possible to specify the order of the feature points based on the processing amount, the code amount, the image quality, etc.

Moreover, a decoder of Example 47 may be any of the decoders of Examples 43 to 46, in which the signal indicates an identifier for identifying the specifying method from specifying methods.

With this, it may be possible to adaptively select the specifying method from among specifying methods. Accordingly, it may be possible to select the specifying method from among specifying methods based on the processing amount, the code amount, the image quality, etc. It also may be possible to adaptively and efficiently switch between the specifying methods.

Moreover, a decoder of Example 48 may be any of the decoders of Examples 28 to 30 and 43 to 47, in which the locations of the feature points are represented by a difference from a reference location.

With this, it may be possible to reduce the code amount of the location of the feature point. Accordingly, it may be possible to reduce the code amount of the geometric information, thereby allowing for the reduction in the code amount of the video.

Moreover, a decoder of Example 49 may be the decoder of Example 48, in which for the feature points, one location is defined as the reference location.

With this, it may be possible to reduce the code amount of the location of the feature point. Accordingly, it may be possible to reduce the code amount of the geometric information. It also may be possible to reduce the complexity of the processing and the increase in processing amount.

Moreover, a decoder of Example 50 may be the decoder of Example 48, in which the feature points are categorized into groups, and for each of the groups, one location is defined as the reference location.

With this, it may be possible to adaptively define the reference location according to the groups. It also may be possible to reduce the code amount of the location of the feature point using the reference location. Accordingly, it may be possible to reduce the code amount of the geometric information.

Moreover, a decoder of Example 51 may be the decoder of Example 48, in which the reference location is a location of a feature point among the feature points that is immediately before a current feature point in a decoding order.

With this, it may be possible to reduce the code amount of the location of the feature point using a distance between the feature points. Accordingly, it may be possible to reduce the code amount of the geometric information.

Moreover, a decoder of Example 52 may be the decoder of Example 28 or 30, in which the locations of the feature points are represented by locations of points projected onto a two-dimensional plane from the feature points.

With this, it may be possible to represent the locations of the feature points as two-dimensional coordinate values. With this, it may be possible to reduce the code amount of the location of the feature point. Accordingly, it may be possible to reduce the code amount of the geometric information.

Moreover, an encoding method of Example 53 is an encoding method including: encoding at least one fundamental image for use in displaying a video; and encoding, as information corresponding to each of images of the video, geometric information indicating geometric attributes within a region including a face of a person.

In this manner, it may be possible to implement the encoding method corresponding to the encoder described above. Accordingly, it may be possible to produce the similar effect to the encoder described above through the encoding method.

Moreover, a decoding method of Example 54 is a decoding method including: decoding at least one fundamental image for use in displaying a video; and decoding, as information corresponding to each of images of the video, geometric information indicating geometric attributes within a region including a face of a person.

In this manner, it may be possible to implement the decoding method corresponding to the decoder described above. Accordingly, it may be possible to produce the similar effect to the decoder described above through the decoding method.

Moreover, a medium of Example 55 is a non-transitory computer readable medium storing one or more bitstreams including: at least one fundamental image for use in displaying a video; and, as information corresponding to each of images of the video, geometric information indicating geometric attributes within a region including a face of a person, the one or more bitstreams causing a decoder to perform a process of (i) decoding the at least one fundamental image; and (ii) decoding the geometric information.

With this, it may be possible to implement the medium storing one or more bitstreams corresponding to the decoder and decoding method described above. Accordingly, it may be possible to produce the similar effect to the decoder and decoding method described above using the medium.

Furthermore, these general or specific aspects may be implemented using a system, an apparatus, a method, an integrated circuit, a computer program, or a non-transitory computer readable medium such as a CD-ROM, or any combination of systems, apparatuses, methods, integrated circuits, computer programs, or media.

### [Definitions of Terms]

### The respective terms may be defined as indicated below as examples.

### (1) image

An image is a data unit configured with a set of pixels, is a picture or includes blocks smaller than a picture. Images include a still image in addition to a video.

### (2) picture

A picture is an image processing unit configured with a set of pixels, and is also referred to as a frame or a field.

### (3) block

A block is a processing unit which is a set of a particular number of pixels. The block is also referred to as indicated in the following examples. The shapes of blocks are not limited. Examples include a rectangle shape of M×N pixels and a square shape of M×M pixels for the first place, and also include a triangular shape, a circular shape, and other shapes.

### (examples of blocks)

- slice/tile/brick
- CTU / super block / basic splitting unit
- VPDU / processing splitting unit for hardware
- CU / processing block unit / prediction block unit (PU) / orthogonal transform block unit (TU) / unit
- sub-block

### (4) pixel/sample

A pixel or sample is a smallest point of an image. Pixels or samples include not only a pixel at an integer position but also a pixel at a sub-pixel position generated based on a pixel at an integer position.

### (5) pixel value / sample value

A pixel value or sample value is an eigen value of a pixel. Pixel or sample values naturally include a luma value, a chroma value, an RGB gradation level and also covers a depth value, or a binary value of 0 or 1.

### (6) flag

A flag indicates one or more bits, and may be, for example, a parameter or index represented by two or more bits. Alternatively, the flag may indicate not only a binary value represented by a binary number but also a multiple value represented by a number other than the binary number.

### (7) signal

A signal is the one symbolized or encoded to convey information. Signals include a discrete digital signal and an analog signal which takes a continuous value.

### (8) stream/bitstream

A stream or bitstream is a digital data string or a digital data flow. A stream or bitstream may be one stream or may be configured with a plurality of streams having a plurality of hierarchical layers. A stream or bitstream may be transmitted in serial communication using a single transmission path, or may be transmitted in packet communication using a plurality of transmission paths.

### (9) difference

In the case of scalar quantity, it is only necessary that a simple difference (x - y) and a difference calculation be included. Differences include an absolute value of a difference (|x - y|), a squared difference (x^2 - y^2), a square root of a difference (√(x - y)), a weighted difference (ax - by: a and b are constants), an offset difference (x - y + a: a is an offset).

### (10) sum

In the case of scalar quantity, it is only necessary that a simple sum (x + y) and a sum calculation be included. Sums include an absolute value of a sum (|x + y|), a squared sum (x^2 + y^2), a square root of a sum (√(x + y)), a weighted difference (ax + by: a and b are constants), an offset sum (x + y + a: a is an offset).

### (11) based on

A phrase "based on something" means that a thing other than the something may be considered. In addition, "based on" may be used in a case in which a direct result is obtained or a case in which a result is obtained through an intermediate result.

### (12) used, using

A phrase "something used" or "using something" means that a thing other than the something may be considered. In addition, "used" or "using" may be used in a case in which a direct result is obtained or a case in which a result is obtained through an intermediate result.

### (13) prohibit, forbid

The term "prohibit" or "forbid" can be rephrased as "does not permit" or "does not allow". In addition, "being not prohibited/forbidden" or "being permitted/allowed" does not always mean "obligation".

### (14) limit, restriction/restrict/restricted

The term "limit" or "restriction/restrict/restricted" can be rephrased as "does not permit/allow" or "being not permitted/allowed". In addition, "being not prohibited/forbidden" or "being permitted/allowed" does not always mean "obligation". Furthermore, it is only necessary that part of something be prohibited/forbidden quantitatively or qualitatively, and something may be fully prohibited/forbidden.

### (15) chroma

An adjective, represented by the symbols Cb and Cr, specifying that a sample array or single sample is representing one of the two color difference signals related to the primary colors. The term chroma may be used instead of the term chrominance.

### (16) luma

An adjective, represented by the symbol or subscript Y or L, specifying that a sample array or single sample is representing the monochrome signal related to the primary colors. The term luma may be used instead of the term luminance.

### [Notes Related to the Descriptions]

In the drawings, same reference numbers indicate same or similar components. The sizes and relative locations of components are not necessarily drawn by the same scale.

Hereinafter, embodiments will be described with reference to the drawings. Note that the embodiments described below each show a general or specific example. The numerical values, shapes, materials, components, the arrangement and connection of the components, steps, the relation and order of the steps, etc., indicated in the following embodiments are mere examples, and are not intended to limit the scope of the claims.

Embodiments of an encoder and a decoder will be described below. The embodiments are examples of an encoder and a decoder to which the processes and/or configurations presented in the description of aspects of the present disclosure are applicable. The processes and/or configurations can also be implemented in an encoder and a decoder different from those according to the embodiments. For example, regarding the processes and/or configurations as applied to the embodiments, any of the following may be implemented:
(1) Any of the components of the encoder or the decoder according to the embodiments presented in the description of aspects of the present disclosure may be substituted or combined with another component presented anywhere in the description of aspects of the present disclosure.
(2) In the encoder or the decoder according to the embodiments, discretionary changes may be made to functions or processes performed by one or more components of the encoder or the decoder, such as addition, substitution, removal, etc., of the functions or processes. For example, any function or process may be substituted or combined with another function or process presented anywhere in the description of aspects of the present disclosure.
(3) In methods implemented by the encoder or the decoder according to the embodiments, discretionary changes may be made such as addition, substitution, and removal of one or more of the processes included in the method. For example, any process in the method may be substituted or combined with another process presented anywhere in the description of aspects of the present disclosure.
(4) One or more components included in the encoder or the decoder according to embodiments may be combined with a component presented anywhere in the description of aspects of the present disclosure, may be combined with a component including one or more functions presented anywhere in the description of aspects of the present disclosure, and may be combined with a component that implements one or more processes implemented by a component presented in the description of aspects of the present disclosure.
(5) A component including one or more functions of the encoder or the decoder according to the embodiments, or a component that implements one or more processes of the encoder or the decoder according to the embodiments, may be combined or substituted with a component presented anywhere in the description of aspects of the present disclosure, with a component including one or more functions presented anywhere in the description of aspects of the present disclosure, or with a component that implements one or more processes presented anywhere in the description of aspects of the present disclosure.
(6) In methods implemented by the encoder or the decoder according to the embodiments, any of the processes included in the method may be substituted or combined with a process presented anywhere in the description of aspects of the present disclosure or with any corresponding or equivalent process.
(7) One or more processes included in methods implemented by the encoder or the decoder according to the embodiments may be combined with a process presented anywhere in the description of aspects of the present disclosure.
(8) The implementation of the processes and/or configurations presented in the description of aspects of the present disclosure is not limited to the encoder or the decoder according to the embodiments. For example, the processes and/or configurations may be implemented in a device used for a purpose different from the moving picture encoder or the moving picture decoder disclosed in the embodiments.

FIG. 4 is a block diagram illustrating the configuration of an encoding and decoding system according to the present embodiment. For example, the encoding and decoding system includes encoder 100 and decoder 200. The example of FIG. 4 is similar to the example of FIG. 1, but in FIG. 4, the specific configuration and process of encoder 100, the specific configuration and process of decoder 200, and the bitstream are different from those in the example of FIG. 1.

As with the case of the example of FIG. 1, encoder 100 accepts a driving video and fundamental images of a target person, and encodes and compresses them into one or more bitstreams. Subsequently, encoder 100 transmits the compressed bitstreams to decoder 200 through a transmission channel. Finally, decoder 200 reconstructs the output video from the received bitstreams.

The fundamental images are one example of the first information of the present disclosure, and represent visual features on the display of the output video. Moreover, the driving video serves as a motion provider for the visual features on the display of the output video.

### [Data Structure]

FIG. 5 is a diagram illustrating one example of a hierarchical structure of data in a stream. A stream includes, for example, a video sequence. As illustrated in (a) of FIG. 5, the video sequence includes a video parameter set (VPS), a sequence parameter set (SPS), a picture parameter set (PPS), supplemental enhancement information (SEI), and a plurality of pictures.

In a video having a plurality of layers, a VPS includes: a coding parameter which is common between some of the plurality of layers; and a coding parameter related to some of the plurality of layers included in the video or an individual layer.

An SPS includes a parameter which is used for a sequence, that is, a coding parameter which decoder 200 refers to in order to decode the sequence. For example, the coding parameter may indicate the width or height of a picture. It is to be noted that a plurality of SPSs may be present.

A PPS includes a parameter which is used for a picture, that is, a coding parameter which decoder 200 refers to in order to decode each of the pictures in the sequence. For example, the coding parameter may include a reference value for the quantization width which is used to decode a picture and a flag indicating application of weighted prediction. It is to be noted that a plurality of PPSs may be present. Each of the SPS and the PPS may be simply referred to as a parameter set.

As illustrated in (b) of FIG. 5, a picture may include a picture header and at least one slice. A picture header includes a coding parameter which decoder 200 refers to in order to decode the at least one slice.

As illustrated in (c) of FIG. 5 a slice includes a slice header and at least one brick. A slice header includes a coding parameter which decoder 200 refers to in order to decode the at least one brick.

As illustrated in (d) of FIG. 5, a brick includes at least one coding tree unit (CTU).

It is to be noted that a picture may not include any slice and may include a tile group instead of a slice. In this case, the tile group includes at least one tile. In addition, a brick may include a slice.

A CTU is also referred to as a super block or a basis splitting unit. As illustrated in (e) of FIG. 5, a CTU like this includes a CTU header and at least one coding unit (CU). A CTU header includes a coding parameter which decoder 200 refers to in order to decode the at least one CU.

A CU may be split into a plurality of smaller CUs. As illustrated in (f) of FIG. 5, a CU includes a CU header, prediction information, and residual coefficient information. Prediction information is information for predicting the CU, and the residual coefficient information is information indicating a prediction residual to be described later. Although a CU is basically the same as a prediction unit (PU) and a transform unit (TU), it is to be noted that, for example, an SBT to be described later may include a plurality of TUs smaller than the CU. In addition, the CU may be processed for each virtual pipeline decoding unit (VPDU) included in the CU. The VPDU is, for example, a fixed unit which can be processed at one stage when pipeline processing is performed in hardware.

It is to be noted that a stream may not include part of the hierarchical layers illustrated in FIG. 5. The order of the hierarchical layers may be exchanged, or any of the hierarchical layers may be replaced by another hierarchical layer. Here, a picture which is a target for a process which is about to be performed by a device such as encoder 100 or decoder 200 is referred to as a current picture. A current picture means a current picture to be encoded when the process is an encoding process, and a current picture means a current picture to be decoded when the process is a decoding process. Likewise, for example, a CU or a block of CUs which is a target for a process which is about to be performed by a device such as encoder 100 or decoder 200 is referred to as a current block. A current block means a current block to be encoded when the process is an encoding process, and a current block means a current block to be decoded when the process is a decoding process.

Here, a region where parameters for use in encoding are described can be expressed as a header. For example, the header includes SEI. The header can further include VPS, SPS, PPS, SEI, a picture header, a slice header, a CTU header, and a CU header.

Moreover, for example, pictures can be classified into any of types including I picture, P picture, and B picture. I picture is an intra-predicted picture, and is encoded and decoded without referring to another picture. P picture is a uni-predicted picture, and can be encoded and decoded with reference to one other picture. B picture is a bi-predicted picture, and can be encoded and decoded with reference to two other pictures.

Moreover, a moving picture can include multiple GOPs (groups of pictures). GOP means a group of pictures. GOP includes one or more I pictures. GOP may include one or more P pictures, or one or more B pictures. GOP may be a unit for which video editing, random access, and the like are allowed. GOP may include a certain number of pictures, or may include, as a GOP structure, the determined arrangement order of I pictures, P pictures, and B pictures.

### [Configuration and Process of Encoding]

FIG. 6 is a block diagram illustrating the configuration of encoder 100 according to the present embodiment. Encoder 100 generates a bitstream from a fundamental image and a driving video. In this example, encoder 100 includes compressor 101, deriver 102, and compressor 103. Compressor 101 and compressor 103 may be integrated.

For example, compressor 101 compresses the fundamental image by encoding the fundamental image. Moreover, deriver 102 derives geometric information indicating geometric attributes from the driving video. Moreover, compressor 103 compresses the geometric information by encoding the geometric information.

Multiple fundamental images may be used, multiple geometric information items may be used, or multiple bitstreams may be used. The fundamental image is one example of the first information according to the present disclosure. Moreover, the geometric information is one example of the second information according to the present disclosure. It is to be noted that the geometric information indicating geometric attributes is also merely referred to as geometric attributes.

FIG. 7 is a flow chart illustrating an example of an encoding process according to the present embodiment. For example, encoder 100 illustrated in FIG. 6 performs the encoding process illustrated in FIG. 7.

In this example, first, compressor 101 encodes, into a bitstream, one or more first information items which can be used to derive a face identity of the first person (S101). The face identity of the first person may include information related to at least one of hair, spectacles, facial hair, eyebrows, eyes, mouth, nose, skin, facial contour, clothes, and accessories.

It is to be noted that the one or more first information items only need to be transmitted once, and the same first information item is used when each image at decoder 200 is generated. The first information can be encoded using a video codec method such as VVC. The first information may also be transmitted as a separate bitstream from the bitstream of multiple second information items.

An example of the one or more first information items is one or more fundamental images from which the face identity of the first person can be derived by a neural network. The one or more fundamental images may be one or more frames of a driving video, one or more pre-set images containing the face of the first person, or one or more avatars containing the face of the first person. The first person does not need to be an actual person. An object mimicking a person, such as a living thing, structure, or creature mimicking a person, is possible.

For example, the fundamental image may be an image of a region including the face of the first person. The region including the face of the first person at least partially includes the face, and may further include the vicinity of the face. Specifically, the region including the face of the first person may include the head, neck, shoulder, and the like of the first person, may partially include the upper body of the first person, or may include a cap, accessories, clothes and the like which the first person is wearing. Alternatively, the region including the face of the first person may include an object around the face of the first person, such as a small bird sitting on the shoulder of the first person.

A variation of the one or more first information items is an identity vector derived from one or more fundamental images using a neural network. This identity vector may be encoded and directly transmitted to decoder 200, or may be stored into a database from which decoder 200 can retrieve the identity vector.

In the example of FIG. 7, next, deriver 102 derives multiple second information items from multiple images of the driving video (S102). For example, the multiple images of the driving video include the face of the second person. The second person may be the same as the first person described above, or may be different from the first person described above. Each second information item represents interpretable geometric attributes of the face of the second person for each corresponding image, or corresponding frame of a driving video at a time instance.

For example, the second information is the geometric information indicating geometric attributes of the region including the face of the second person. The region including the face of the second person at least partially includes the face, and may further include the vicinity of the face. Specifically, the region including the face of the second person may include the head, neck, shoulder, and the like of the second person, may partially include the upper body of the second person, or may include a cap, accessories, clothes and the like which the second person is wearing. Alternatively, the region including the face of the second person may include an object around the face of the second person, such as a small bird sitting on the shoulder of the second person.

The second information can be derived using a neural network. Deriver 102 may include a neural network. One example of the second information is geometric information indicating geometric attributes of the face of the second person, and one example of the geometric attributes of the face is facial landmarks.

FIG. 8 is a diagram illustrating an example of facial landmarks derived from an image. In this example, facial landmarks correspond to multiple points on eyes, eyebrows, nose, mouth, lips, chin, and facial contour.

FIG. 9 is a diagram illustrating another example of facial landmarks derived from an image. In this example, facial landmarks correspond to more points on eyes, eyebrows, nose, mouth, lips, chin, and facial contour.

FIG. 10 is a diagram illustrating yet another example of facial landmarks derived from an image. In this example, facial landmarks correspond to more points on eyes, eyebrows, nose, mouth, lips, chin, cheek, and facial contour.

The facial landmarks are derived from the image including the face. When one or more faces is present in the image, the landmarks may be derived from the largest face. These landmarks denote the locations of feature points on key regions of the face, such as edge in form or changing points, in a region including outline of facial contour, eyes, eyebrows, nose, mouth, lips, and chin. These landmarks allow for the interpretability of facial geometric attributes. Accordingly, in this manner, the attributes to represent the desired emotions and facial expressions can be modified easily.

In the example of FIG. 7, next, compressor 103 compresses and encodes multiple second information items into a bitstream using methods such as entropy encoding (S103).

In each time instance, encoder 100 transmits a new set of second information items representing geometric attributes of the face of the second person derived from each frame of the driving video. The second information can be transmitted as Supplemental Enhancement Information (SEI) messages or other information units in the bitstream. Compressor 103 may be the same as compressor 101, or may be different from compressor 101. The bitstreams are transmitted to decoder 200 via a transmission channel.

By using facial interpretable geometric attributes, it allows for easier understanding of information for use in generating multiple images. In other words, these attributes can be modified easily for controllable generation of pose and facial expression.

In another variation, encoder 100 may include an additional generator. In other words, the encoding method may include an additional generation step. The generator generates multiple images via a neural network from one or more first information items and multiple second information items. The generated multiple images include the generated face of the first person.

Here, the neural network takes in, as input, the one or more first information items and the multiple second information items, and maps the interpretable facial geometric attributes of the second person onto the face identity of the first person. With this, encoder 100 also can present the same output frames as those generated in decoder 200.

In the present disclosure, encoder 100 encodes two types of information into a bitstream. The first information is used to derive the face identity of the first person, and the multiple second information items represent the geometric attributes of the second person.

Some possible bitstream layout candidates are illustrated below. The bitstream layout can also be any of the bitstream layout candidates, or a combination of two or more of the bitstream layout candidates.

FIG. 11 is a diagram illustrating an example of a bitstream layout candidate. In this example, the bitstream includes one first information item and multiple second information items in one group of pictures (GOP).

FIG. 12 is a diagram illustrating another example of a bitstream layout candidate. In this example, the bitstream includes one first information item and multiple second information items in the first GOP, and multiple second information items in each remaining GOP.

FIG. 13 is a diagram illustrating yet another example of a bitstream layout candidate. In this example, the first bitstream includes one or more first information items, and the second bitstream includes multiple second information items. For example, the first bitstream may be stored in a recording medium, or the second bitstream may be transmitted through a communication network.

FIG. 14 is a diagram illustrating yet another example of a bitstream layout candidate. In this example, the bitstream includes multiple first information items and multiple second information items in one GOP.

For example, when information on multiple persons is signaled from encoder 100 to decoder 200, multiple first information items each corresponding to a different one of the multiple persons may be signaled as the information on multiple persons.

Alternatively, for example, like multiple types of avatars corresponding to one person, multiple first information items each corresponding to a different one of multiple patterns associated with the first person may be signaled from encoder 100 to decoder 200. In decoder 200, the multiple patterns may be switchable.

FIG. 15 is a diagram illustrating an example of a bitstream layout candidate compliant with VVC codec. In this example, the first information corresponds to a fundamental image and is encoded as a VVC intra-predicted picture, and the second information corresponds to the facial landmark data and is encoded into an SEI. Each access unit includes image data (e.g., VVC intra) or facial landmark data.

FIG. 16 is a diagram illustrating another example of a bitstream layout candidate compliant with VVC. In this example, the first information corresponds to a fundamental image and is encoded as a VVC intra-predicted picture, and the second information corresponds to the facial landmark data and is encoded into an SEI. Each access unit includes both image data (e.g., VVC intra) and facial landmark data, or only facial landmark data.

The VVC codec can be replaced with any other video codec, image codec, or 3D codec, such as HEVC, AVC, AV1, SVC, EVC, JPEG, or V3C. The facial landmark data may be encoded into VSEI or SEI that is present in any video codec, image codec, or 3D codec, or into other information units in the bitstream. Each access unit may include other NAL units that are from the video coding layer or non-video coding layer.

In another example, the facial landmark data may be data of a new nal_unit_type in the video coding layer. In other example, a slice NAL that contains the fundamental image may be included in the first access unit, and subsequent access units may each have a slice NAL that indicates their respective images are monochrome images such as a black background or a green background.

Moreover, for the subsequent access units' slice NAL, all coding units may be encoded with skip mode, or a simple copy of the image of the first access unit. Alternatively, for the subsequent access units' slice NAL, a replacement image of any texture encodable with few code amount may be encoded. Moreover, in doing so, a parameter that indicates to ignore the slice NAL data may be encoded.

It is to be noted that, in the examples described above, the first information corresponding to the fundamental image is included in the top of the GOP. However, the first information may be included in the middle of the GOP instead of the top of the GOP. For example, the first information corresponding to the fundamental image is included in the top of the GOP, and the first information same as or different from the first information included in the top of the GOP may be further included in the middle (e.g., the center) of the GOP.

Moreover, in the examples described above, the first information is encoded as an intra-predicted picture. However, the first information may be encoded as an inter-predicted picture instead of an intra-predicted picture. For example, the first information corresponding to the fundamental image may be encoded into the top of the GOP as an intra-predicted picture, and the first information same as or different from the first information encoded into the top of the GOP may be further encoded into the middle (e.g., the center) of the GOP as an inter-predicted picture.

Moreover, according to the normal video encoding method, for each of the subsequent access units, an image (picture) including the face of the first person or the second person at the time instance may be encoded. More specifically, for each of the subsequent access units, a low-quality image (low-quality picture) including the face of the first person or the second person at the time instance and encodable with few code amount may be encoded. With this, it may be possible to optionally reconstruct a low-quality video.

There are various frameworks for generating the second information to represent geometric attributes as illustrated in FIG. 8, FIG. 9, and FIG. 10. Accordingly, control parameters may be included in the bitstream to prevent loss of the flexibility of the second information. For example, the following control parameters may be used.

| | |
|---|---|
| -Control parameter 1: | Index of frameworks |
| -Control parameter 2: | Customization of frameworks |
| -Control parameter 3: | Reset of frameworks |
| -Control parameter 4: | Number of landmarks |
| -Control parameter 5: | Order of landmarks |
| -Control parameter 6: | Coordinate system |
| -Control parameter 7: | Landmark encoding method. |

For example, these control parameters are arranged in the top of each group of pictures (GOP). In another example, these parameters are transmitted every time the second information is transmitted. It is to be noted that, for each driving frame, a set of landmarks derived from the driving frame is transmitted as the second information.

Any possible combinations of one or more control parameters may be included into the bitstream including the set of landmarks, in any order. FIG. 17, FIG. 18, and FIG. 19 each illustrate an example of a bitstream for transmitting the second information using all the control parameters.

FIG. 17 is a diagram illustrating an example of a bitstream layout candidate including control parameters. As illustrated in this example, the control parameters may be encoded into the header of an access unit. Specifically, the control parameters and the set of facial landmarks may be encoded into the same SEI in the access unit.

FIG. 18 is a diagram illustrating another example of a bitstream layout candidate including control parameters. In this example, the control parameters are encoded into a SEI in the access unit, and the set of facial landmarks is encoded into a separate SEI in the same access unit.

FIG. 19 is a diagram illustrating yet another example of a bitstream layout candidate including control parameters. In this example, the control parameters are encoded into a SEI in the first access unit of the GOP, and the set of facial landmarks is encoded into a SEI in each remaining access unit of the same GOP.

The control parameters may be encoded in any permutation, and is not restricted to the layout illustrated in FIG. 17, FIG. 18, or FIG. 19.

In a variation, the contents of the control parameter SEI may take different values in each GOP, and the control parameter SEI of each GOP determines the values of the control parameters across all the access units within the same GOP. In another variation, the contents of the control parameter SEI may be restricted to the same values for all the GOPs in the bitstream.

### (Control Parameter 1: Index of Frameworks)

The framework used in deriving landmarks for each frame may be the framework as illustrated in FIG. 8, FIG. 9, or FIG. 10. At least one frame work is used to derive the landmarks. Encoder 100 has at least one framework that can derive the second information.

FIG. 20 is a diagram illustrating an example in which one framework is set. For example, the framework includes a framework index, the number of landmarks, and the locations of landmarks.

The framework index is an index for identifying one of the frameworks. The number of landmarks is the number of landmarks for use in the framework. The locations of landmarks are basic locations of landmarks for use in the framework. For example, multiple landmarks are derived from the driving frame based on the locations of landmarks and the number of landmarks determined in the framework.

In this example, encoder 100 has only one framework as illustrated in FIG. 8. As there is only one framework, this framework is set as a default framework. In another variation, encoder 100 may have two or more frameworks each of which has a corresponding index. For example, a framework may be selected using the index from a lookup table in which two or more frameworks are set.

FIG. 21 is a diagram illustrating an example in which two frameworks are set. In this example, the framework in FIG. 9 and the framework in FIG. 10 are set in the lookup table, and framework 2 corresponding to the framework in FIG. 10 is set as the default framework. Here, it is to be noted that framework x is the framework whose index is 2.

For example, when control parameter 1 is not signaled in an access unit, the default framework is selected, and the second information for the access unit is derived using the default framework. When control parameter 1 is signaled, the second information for the access unit is derived using the framework specified by the index indicated by control parameter 1 in the lookup table.

### (Control Parameter 2: Customization of Frameworks)

Encoder 100 may use any of initial frameworks present in the lookup table.

However, when deriving landmarks from the driving frame, encoder 100 may derive landmarks using a framework customized (modified) from the initial framework instead of the initial framework. In this case, using control parameter 2 for signaling whether the framework should be customized from the initial framework, it is possible to flexibly customize the framework for use in deriving multiple second information items.

In one variation, the default framework present in the lookup table is replaced with the customized framework, and subsequent access units refer to this new framework.

FIG. 22 is a diagram illustrating an example in which a framework is customized from an initial framework. In this example, the framework illustrated in FIG. 8 is set as the initial framework. This framework is customized to the framework illustrated in FIG. 10, and encoder 100 derives the second information for subsequent access units using the customized framework.

In another variation, the customized framework is added to the lookup table and is set as the default framework. Thereafter, subsequent access units can refer to the customized framework.

FIG. 23 is an example in which the customized framework is added to a set of frameworks. In this example, the customized framework is added to the lookup table and set as the default framework, and is used by encoder 100 when deriving the second information in subsequent access units.

It is to be noted that these variations (customization and addition of the framework) may be implemented independently from the number of frameworks present in the lookup table at encoder 100. With control parameter 2, the framework is not restricted to only the initial framework, and it is possible to flexibly use the customizable frameworks.

### (Control Parameter 3: Reset of Frameworks)

In the variation as illustrated in FIG. 22, the framework is customized. Control parameter 3 is used as a parameter for signaling that the framework is reset (initialized) back to the initial framework. Then, encoder 100 can refer to the initial framework when deriving the second information in subsequent access units.

FIG. 24 is a diagram illustrating an example in which the customized framework is reset back to the initial framework. In this example, the framework has already been customized. Control parameter 3 specifies that the current access unit and subsequent access units refer to not the customized framework but the initial framework.

Moreover, in this example, encoder 100 resets the customized framework set as the default framework back to the initial framework, and uses the initial framework to derive the second information in subsequent access units. Another method of resetting the framework is to issue an instantaneous decoding Refresh (IDR) frame.

FIG. 25 is a diagram illustrating an example in which a set of customized frameworks is reset back to a set of initial frameworks. In this example, the customized framework has already been added to the lookup table and set as the default framework. Control parameter 3 is used as a parameter for signaling that a set of customized frameworks is reset back to a set of initial frameworks.

Specifically, control parameter 3 removes the additional customized framework, and resets the default framework back to the initial setting. Then, encoder 100 can refer to the initial default framework when deriving the second information in subsequent access units.

### (Control Parameter 4: Number of Landmarks)

Control parameter 4 is a parameter for signaling the number of landmarks for each frame. With control parameter 4, it is possible to efficiently specifying the number of landmarks.

FIG. 26 is a diagram illustrating an example of a user interface to allow a user to select the number of landmarks. In this example, the number of landmarks for the customized framework is specified. The location of each landmark may be further specified.

This framework also can have a customizable number of landmarks for each frame. Accordingly, each access unit can include a bit sequence of one or more bits for signaling the number of landmarks for each frame.

### (Control Parameter 5: Oder of Landmarks)

When the locations of landmarks are customized, the definition of the landmark locations can be transmitted as a bitmap or a table. In another variation, the landmarks may be arranged in any order such as the reverse order of landmarks in the initial framework.

As with the case of the customization of the number of landmarks as illustrated in FIG. 26, the order of landmarks can also be customized based on levels of importance. The landmarks representing the core central region of the face such as eyes, nose and lips may be located towards the beginning of the transmitted data packet. In contrast, other landmarks such as cheeks and forehead may be located towards the end of the transmitted data packet.

FIG. 27 is a diagram illustrating an example of the order of landmarks. In this example, the landmarks are ordered based on their importance from a more important landmark to a less important landmark. Then, more important landmarks are arranged towards the beginning of the bitstream. With this, the process of the rearward landmarks is adjusted in the customization of the number of landmarks, and thus it is possible to easily scale up and down the bitstream.

It is to be noted that the order of landmarks corresponds to the processing order of landmarks, e.g., the encoding order of landmarks.

### (Control Parameter 6: Coordinate System)

Coordinates for individual landmarks in each frame can be represented in two-dimensional or three-dimensional formats. The coordinate systems may include cartesian, cylindrical, spherical, or homogenous coordinates, and may be left or right-handed. For example, control parameter 6 indicating the coordinate system used in defining the location of each landmark may be encoded in the bitstream along with the definition of origin to allow for easier interpretability of each landmark location. The origin of the coordinate system is typically the center of the camera lens or sensors.

In the use case of the cartesian coordinate system, for example, the z-axis is the camera's optical axis, and the positive z-direction corresponds to the direction of camera pointing to the face from the center of the camera. The x-axis and y-axis are defined as the horizontal and vertical directions from the center of the camera lens, respectively. When this example is applied to FIG. 8, FIG. 9, or FIG. 10, the x, y and z-axes are defined as right direction, downward direction, and direction from in front to behind the page, respectively, and the origin is defined as the center of the camera lens.

FIG. 28 is a diagram illustrating an example of coordinate systems. Specifically, FIG. 28 illustrates, as a table, an example of some coordinate system candidates with serialized indexes easily convertible into a bit sequence of one or more bits. The coordinate system candidates include categories of a coordinate system index, a coordinate system type, and left-handed or right-handed. The coordinate system candidates may further include the number of axes.

The coordinate system may be identified by specifying the coordinate system index using control parameter 6.

### (Control Parameter 7: Landmark Encoding Method)

There may be various methods of encoding landmarks. An additional bit sequence of one or more bits may be used to signal control parameter 7 indicating the landmark encoding method to be transmitted for each frame. Some examples of encoding the landmarks are described below. It is to be noted that the landmark encoding method is not restricted to the examples described below.

One example of encoding landmarks is absolute encoding (direct encoding). In other words, instead of the relative locations of landmarks, the absolute locations of landmarks may be directly encoded.

FIG. 29 is a diagram illustrating a visual example of landmarks to which absolute encoding is applied. For example, landmarks are numbered as indexes, and the absolute location of each numbered landmark is encoded.

FIG. 30 is a diagram illustrating an example of information to be encoded in the example of FIG. 29. For individual landmarks in each frame, the coordinate values indicating the absolute locations as illustrated in FIG. 30 may be encoded.

Alternatively, to reduce the amount of information to be transmitted, a key reference landmark such as the tip of the nose is selected, and other landmarks may be delta encoded from this reference landmark. By default, the reference landmark is the first landmark in each image of the bitstream. Otherwise, the reference landmark may be indicated in the landmark reference table.

FIG. 31 is a diagram illustrating a visual example of landmarks to which delta encoding is applied. The reference landmark is used as the reference location to represent the locations of other landmarks. In this example, the reference landmark is identified as landmark 0 (the first landmark in the encoded image). The arrows in FIG. 31 illustrate the reference relations, and indicate that the reference landmark (landmark 0) is referred to in encoding other landmarks. It is to be noted that, in this case, landmark x means the landmark numbered with x.

FIG. 32 is a diagram illustrating an example of information to be encoded in the example of FIG. 31. As illustrated in this example, for landmark 0, the absolute coordinate values of landmark 0 are encoded. For other landmarks, the relative coordinate values of other landmarks with respect to landmark 0 are encoded.

FIG. 33 is a diagram illustrating another visual example of landmarks to which delta encoding is applied. In this example, the landmarks are divided into categories (groups) such as nose, mouth, eyebrows and eyes, and the reference landmark is encoded for each category using absolute encoding.

The locations of all other landmarks within the same category are encoded with reference to the location of the key landmark in the category. The arrows indicate that other landmarks refer to the reference landmark within the same category (landmark 0 for nose, landmark 5 for mouth, landmark 11 for eyebrow).

FIG. 34 is a diagram illustrating an example of information to be encoded in the example of FIG. 33. As illustrated in this example, for the reference landmark of each category, the absolute coordinate values of the reference landmark are encoded. For other landmarks, the relative coordinate values of other landmarks with respect to the reference landmark are encoded.

The categories may be encoded into a bit sequence of one or more bits in the bitstream. With delta encoding, the amount of information to be transmitted for each frame is reduced.

FIG. 35 is a diagram illustrating yet another visual example of landmarks to which delta encoding is applied. In this example, instead of one reference landmark for multiple landmarks, for each of the landmarks, a neighboring landmark of the landmark is used as the reference landmark. The arrows in FIG. 35 indicate that which landmark is referred to in encoding each landmark.

FIG. 36 is a diagram illustrating an example of information to be encoded in the example of FIG. 35. For example, in this case, it is assumed that information indicating, for each landmark, which landmark is used as the reference landmark is also transmitted in the bitstream. Specifically, the reference landmark number for identifying the reference landmark of each landmark is encoded. The reference landmark may be arbitrarily selected.

FIG. 37 is a diagram illustrating yet another visual example of landmarks to which delta encoding is applied. When the delta encoding is performed using a neighboring landmark as the reference landmark, a spiral ordering may be introduced to identify the nearest reference landmark of each landmark. By doing so, the reference distance between landmarks can be kept to a minimum. In addition, the reference landmark number illustrated in FIG. 36 is no longer needed. This reduces the entire code amount in terms of both the elimination of the reference landmark number in FIG. 36 and the reduction in code amount of each landmark.

FIG. 38 is a diagram illustrating an example of a sparse matrix represented by projecting locations of landmarks onto a two-dimensional plane. Each landmark may occupy one or more pixels on the image. In this example, the bit equal to 1 indicates locations on the image that correspond to landmark locations, and the bit equal to 0 indicates other locations. Consequently, the landmark locations are transformed to a sparse matrix. Then, methods such as run-length encoding (FIG. 39) or array representation (FIG. 40 and FIG. 41) may be used to encode the landmark locations. For run-length encoding, a data stream in a raster scan order is encoded based on a data value and the corresponding count.

FIG. 39 is a diagram illustrating an example of run-length encoding for the example of FIG. 38. In FIG. 39, the entire first row and the first cell of the second row (total of 10 pixels) have a value of 0, resulting in the first entry of the run-length encoded bitstream being (0, 10). The two subsequent pixels have a value of 1, so the next entry of the run-length encoded bitstream is (1, 2). This process is repeated for the entire sparse matrix.

FIG. 40 is a diagram illustrating an example of two-dimensional array representation for the example of FIG. 38. FIG. 41 is a diagram illustrating an example of one-dimensional array representation for the example of FIG. 38. Here, R represents the location of the cell in the vertical direction (the location of the row including the cell), and C represents the location of the cell in the horizontal direction (the location of the column including the cell). For array representations, the location of each landmark is encoded into the bitstream. The order of signaling landmarks may be equal to the order of appearance or indexing of landmarks.

Any combinations of one or more of the seven above-mentioned control parameters may be included into the bitstream in any order. This enhances flexibility in encoding the second information, and allows for easier understanding and interpreting the received information.

It is to be noted that, for each driving frame, a set of landmarks derived from the driving frame is transmitted.

It is to be noted that the methods using the abovementioned control parameters may be used not only as methods for defining the customized framework but also as methods for defining the preset framework.

Moreover, the facial landmarks are one example of geometric attributes within the region including a face, and the geometric attributes within the region including a face are not limited to the facial landmarks. For example, the geometric attributes may be represented by a polygon model instead of a group of points. In the polygon model, the shape of an object is represented by a combination of polygons. Moreover, the geometric attributes may be represented by another geometric model. Moreover, the geometric attributes may be represented by the locations of parts of the face.

Moreover, the geometric attributes may be represented in three-dimensional format or two-dimensional format. For example, the facial landmarks may be represented in three-dimensional format or two-dimensional format. The abovementioned landmarks are basically represented in three-dimensional format, but even when represented in two-dimensional format, a similar role can be played.

### [Configuration and Process of Decoding]

FIG. 42 is a block diagram illustrating the configuration of decoder 200 according to the present embodiment. Decoder 200 generates an output video including images from a bitstream. In this example, decoder 200 includes decompressor 201, decompressor 202, deriver 203, and generator 204. Decompressor 201 and decompressor 202 may be integrated. Moreover, deriver 203 and generator 204 may be integrated.

For example, decompressor 201 decompresses the fundamental image by decoding the fundamental image. Moreover, decompressor 202 decompresses geometric information by decoding the geometric information indicating geometric attributes. Deriver 203 derives the face identity of the first person. Generator 204 generates images included in an output video.

Multiple fundamental images may be used, multiple geometric information items may be used, or multiple bitstreams may be used. The fundamental image is one example of the first information according to the present disclosure. Moreover, the geometric information is one example of the second information according to the present disclosure. It is to be noted that the geometric information indicating geometric attributes is also merely referred to as geometric attributes.

FIG. 43 is a flow chart illustrating an example of a decoding process according to the present embodiment. For example, decoder 200 illustrated in FIG. 42 performs the decoding operation illustrated in FIG. 43.

In this example, first, decompressor 201 decodes one or more first information items from a bitstream (S201). Subsequently, deriver 203 derives the face identity of the first person using the one or more first information items. The face identity of the first person may include information related to at least one of hair, spectacles, facial hair, eyebrows, eyes, mouth, nose, skin, facial contour, clothes, and accessories.

It is to be noted that the one or more first information items only need to be received once, and the same first information item can be used to generate each image at decoder 200. The first information can be decoded using a video codec method such as VVC. The first information may also be received as a separate bitstream from the bitstream of multiple second information items.

An example of the one or more first information items is one or more fundamental images from which the face identity of the first person can be derived by a neural network. The one or more fundamental images is one or more frames of a driving video, one or more pre-set images containing the face of the first person, or one or more avatars containing the face. The first person does not need to be an actual person. An object mimicking a person, such as a living thing, structure, or creature mimicking a person, is possible.

For example, the fundamental image may be an image of a region including the face of the first person. The region including the face of the first person at least partially includes the face, and may further include the vicinity of the face. Specifically, the region including the face of the first person may include the head, neck, shoulder, and the like of the first person, may partially include the upper body of the first person, or may include a cap, accessories, clothes and the like which the first person is wearing. Alternatively, the region including the face of the first person may include an object around the face of the first person, such as a small bird sitting on the shoulder of the first person.

A variation of the one or more first information items is an identity vector derived at encoder 100 using a neural network. This identity vector may be encoded at encoder 100 and received from encoder 100 by decoder 200, or may be stored into a database by encoder 100 and retrieved from the database by decoder 200 upon authentication of the user.

In the example of FIG. 43, next, decompressor 202 decodes multiple second information items from the bitstream to an interpretable geometric space (S202). Each decoded second information item represents interpretable geometric attributes of the face of the second person derived by encoder 100 from the corresponding frame of the driving video at the corresponding time instance. Such attributes can be easily understood by humans. The second person may be the same as the first person described above, or may be different from the first person described above.

For example, the second information is the geometric information indicating geometric attributes of the region including the face of the second person. The region including the face of the second person at least partially includes the face, and may further include the vicinity of the face. Specifically, the region including the face of the second person may include the head, neck, shoulder, and the like of the second person, may partially include the upper body of the second person, or may include a cap, accessories, clothes and the like which the second person is wearing. Alternatively, the region including the face of the second person may include an object around the face of the second person, such as a small bird sitting on the shoulder of the second person.

In each time instance, decoder 200 receives a new set of second information items representing geometric attributes derived from one frame of the driving video. The second information can be used by a neural network to generate each image. The second information can be transmitted as Supplemental Enhancement Information (SEI) messages or other information units in the bitstream.

One example of the multiple second information items is geometric information indicating geometric attributes. For example, the geometric attributes are facial landmarks derived from one or more images including the face of the second person.

FIG. 8 is a diagram illustrating an example of facial landmarks interpreted from an image. In this example, facial landmarks correspond to multiple points on eyes, eyebrows, nose, mouth, lips, chin, and facial contour.

FIG. 9 is a diagram illustrating another example of facial landmarks interpreted from the second information. In this example, facial landmarks correspond to more points on eyes, eyebrows, nose, mouth, lips, chin, and facial contour.

FIG. 10 is a diagram illustrating yet another example of facial landmarks interpreted from the second information. In this example, facial landmarks correspond to more points on eyes, eyebrows, nose, mouth, lips, chin, cheek, and facial contour.

The facial landmarks are interpreted from the second information. These landmarks denote the locations of feature points on key regions of the face, such as edge in form or changing points, in a region including outline of facial contour, eyes, eyebrows, nose, mouth, lips, and chin. These landmarks allow for the interpretability of facial geometric attributes. Accordingly, in this manner, the attributes to represent the desired emotions and facial expressions can be modified easily.

In the example of FIG. 43, next, generator 204 generates multiple images based on one or more decoded first information items, one or more decoded second information items, and a neural network (S203). Specifically, generator 204 generates multiple images via a neural network from the face identity corresponding to the one or more decoded first information items, and the multiple decoded second information items. The generated multiple images include the face of the first person.

Here, the neural network takes in as input the face identity derived from the one or more decoded first information items and the multiple decoded second information items, to map the interpretable geometric attributes of the second person onto the face identity of the first person.

By using the interpretable geometric attributes, it allows for easier understanding of information for use in generating multiple images. In other words, these attributes can be modified easily for controllable generation of pose and facial expression.

In generating multiple images, one or more first information items may be used instead of the face identity or in addition to the face identity.

FIG. 44 is a concept diagram illustrating a decoding process at each time instance. In this example, decoder 200 receives compressed first information and compressed second information at first time instance (t = 0). Decoder 200 then stores the compressed first information in memory 252 of decoder 200. Moreover, decoder 200 performs the decoding process on the compressed first information and the compressed second information at the first time instance (t = 0) and inputs the first information and the second information to the neural network to generate an image at the first time instance (t = 0).

Decoder 200 receives the compressed second information at the subsequent time instance (t = T), and retrieves and obtains the compressed first information from memory 252 of decoder 200. Decoder 200 then performs the decoding process on the compressed first information and the compressed second information at the subsequent time instance (t = T) and inputs the first information and the second information to the neural network to generate an image at the subsequent time instance (t = T).

Decoder 200 may store the first information obtained by performing the decoding process on the compressed first information in memory 252 of decoder 200. Decoder 200 then obtains the first information to which the decoding process has been applied, at the subsequent time instance (t = T), and may input the first information obtained from memory 252 to the neural network.

FIG. 45 is a diagram illustrating examples of different neural networks for generating multiple images. Specifically, a generative adversarial network, a variational autoencoder, a flow-based generative model, and a diffusion model are illustrated in FIG. 45.

The generative adversarial network is a generative model. The generative adversarial creates new data instances that are similar to the input data via learning characteristics in the input data. Specifically, an unsupervised task of the generative model is converted into a supervised task by two types of sub-models.

For example, a generator sub-model generates fake samples, and a discriminator sub-model distinguishes true inputs from the fake samples generated by the generator sub-model. The output images are then generated via a minimax game to maximize the discrimination probability of the discriminator sub-model in assigning accurate labels to the true inputs and the fake samples and simultaneously minimize the differences in distributions of the true inputs and the fake samples.

The variational autoencoder first compresses input data into a multivariate latent distribution for reconstructing data from the latent space as accurately as possible. With this, data compression and dimensionality reduction is efficiently performed. The flow-based generative model converts a source distribution to the distribution of training data via a sequence of one or more invertible transformations. This allows for the learning of the data distribution and exact computation of likelihood of the final target.

The diffusion model is also a generative model. The diffusion model also creates new data instances similar to the training data. The diffusion model first degrades the structure of the training data via iterative infusion of perturbations and noise before starting a denoising process in an attempt to recover the original data. This results in iterative mapping of data into latent distributions via Markov chains where the latent state in each step is only dependent on the latent state in the previous step. The data is then recovered by denoising in a hierarchical fashion.

An alternative example of the abovementioned neural networks may comprise of a combination of any of the abovementioned neural networks or may also include other types of generative models.

In the present disclosure, decoder 200 decodes two types of information from the bitstream. The first information is used to derive the face identity of the first person, and the multiple second information items represent the geometric attributes of the second person.

Some possible bitstream layout candidates are illustrated below. The bitstream layout can also be any of the bitstream layout candidates, or a combination of two or more of the bitstream layout candidates.

FIG. 11 is a diagram illustrating an example of a bitstream layout candidate. In this example, the bitstream includes one first information item and multiple second information items in one group of pictures (GOP).

FIG. 12 is a diagram illustrating another example of a bitstream layout candidate. In this example, the bitstream includes one first information item and multiple second information items in the first GOP, and multiple second information items in each remaining GOP.

FIG. 13 is a diagram illustrating yet another example of a bitstream layout candidate. In this example, the first bitstream includes one or more first information items, and the second bitstream includes multiple second information items. For example, the first bitstream may be stored in a recording medium, or the second bitstream may be transmitted through a communication network.

FIG. 14 is a diagram illustrating yet another example of a bitstream layout candidate. In this example, the bitstream includes multiple first information items and multiple second information items in one GOP.

For example, when information on multiple persons is signaled from encoder 100 to decoder 200, multiple first information items each corresponding to a different one of the multiple persons may be signaled as the information on multiple persons.

Alternatively, for example, like multiple types of avatars corresponding to one person, multiple first information items each corresponding to a different one of multiple patterns associated with the first person may be signaled from encoder 100 to decoder 200. In decoder 200, the multiple patterns may be switchable.

FIG. 15 is a diagram illustrating an example of a bitstream layout candidate compliant with VVC codec. In this example, the first information corresponds to a fundamental image and is decoded as a VVC intra-predicted picture, and the second information corresponds to the facial landmark data and is decoded from the SEI. Each access unit includes image data (e.g., VVC intra) or facial landmark data.

FIG. 16 is a diagram illustrating another example of a bitstream layout candidate compliant with VVC. In this example, the first information corresponds to a fundamental image and is decoded as a VVC intra-predicted picture, and the second information corresponds to the facial landmark data and is decoded from the SEI. Each access unit includes both image data (e.g., VVC intra) and facial landmark data, or only facial landmark data.

The VVC codec can be replaced with any other video codec, image codec, or 3D codec, such as HEVC, AVC, AV1, SVC, EVC, JPEG, or V3C. The facial landmark data may be decoded from VSEI or SEI that is present in any video codec, image codec, or 3D codec, or from other information units in the bitstream. Each access unit may include other NAL units that are from the video coding layer or non-video coding layer.

In another example, the facial landmark data may be data of a new nal_unit_type in the video coding layer. In other example, a slice NAL that contains the fundamental image may be included in the first access unit, and subsequent access units may each have a slice NAL that indicates their respective images are monochrome images such as a black background or a green background.

Moreover, for the subsequent access units' slice NAL, all coding units may be decoded with skip mode, or a simple copy of the image of the first access unit. Alternatively, for the subsequent access units' slice NAL, a replacement image of any texture encodable with few code amount may be decoded. Moreover, in doing so, a parameter that indicates to ignore the slice NAL data may be decoded.

It is to be noted that, in the examples described above, the first information corresponding to the fundamental image is included in the top of the GOP. However, the first information may be included in the middle of the GOP instead of the top of the GOP. For example, the first information corresponding to the fundamental image is included in the top of the GOP, and the first information same as or different from the first information included in the top of the GOP may be further included in the middle (e.g., the center) of the GOP.

Moreover, in the examples described above, the first information is decoded as an intra-predicted picture. However, the first information may be decoded as an inter-predicted picture instead of an intra-predicted picture. For example, the first information corresponding to the fundamental image may be decoded in the top of the GOP as an intra-predicted picture, and the first information same as or different from the first information decoded in the top of the GOP may be further decoded in the middle (e.g., the center) of the GOP as an inter-predicted picture.

Moreover, according to the normal video decoding method, for each of the subsequent access units, an image (picture) including the face of the first person or the second person at the time instance may be decoded. More specifically, for each of the subsequent access units, a low-quality image (low-quality picture) including the face of the first person or the second person at the time instance and encodable with few code amount may be decoded. With this, it may be possible to optionally reconstruct a low-quality video.

There are various frameworks for generating the second information to represent geometric attributes as illustrated in FIG. 8, FIG. 9, and FIG. 10. Accordingly, control parameters may be included in the bitstream to prevent loss of the flexibility of the second information. For example, the following control parameters may be used.

| | |
|---|---|
| -Control parameter 1: | Index of frameworks |
| -Control parameter 2: | Customization of frameworks |
| -Control parameter 3: | Reset of frameworks |
| -Control parameter 4: | Number of landmarks |
| -Control parameter 5: | Order of landmarks |
| -Control parameter 6: | Coordinate system |
| -Control parameter 7: | Landmark decoding method. |

For example, these control parameters are arranged in the top of each group of pictures (GOP). In another example, these parameters are transmitted every time the second information is transmitted. It is to be noted that, for each frame, a set of landmarks is interpreted from the transmitted second information.

Any possible combinations of one or more control parameters may be included into the bitstream including the set of landmarks, in any order. FIG. 17, FIG. 18, and FIG. 19 each illustrate an example of a bitstream for transmitting the second information using all the control parameters.

FIG. 17 is a diagram illustrating an example of a bitstream layout candidate including control parameters. As illustrated in this example, the control parameters may be decoded from the header of an access unit. Specifically, the control parameters and the set of facial landmarks may be decoded from the same SEI in the access unit.

FIG. 18 is a diagram illustrating another example of a bitstream layout candidate including control parameters. In this example, the control parameters are decoded from a SEI in the access unit, and the set of facial landmarks is decoded from a separate SEI in the same access unit.

FIG. 19 is a diagram illustrating yet another example of a bitstream layout candidate including control parameters. In this example, the control parameters are decoded from a SEI in the first access unit of the GOP, and the set of facial landmarks is decoded from a SEI in each remaining access unit of the same GOP.

The control parameters may be decoded in any permutation, and is not restricted to the layout illustrated in FIG. 17, FIG. 18, or FIG. 19.

In a variation, the contents of the control parameter SEI may take different values in each GOP, and the control parameter SEI of each GOP determines the values of the control parameters across all the access units within the same GOP. In another variation, the contents of the control parameter SEI may be restricted to the same values for all the GOPs in the bitstream.

### (Control Parameter 1: Index of Frameworks)

The framework used in interpreting landmarks for each frame may be the framework as illustrated in FIG. 8, FIG. 9, or FIG. 10. At least one frame work is used to interpret the landmarks. Decoder 200 has a framework that can be used to interpret the second information (landmark information).

FIG. 20 is a diagram illustrating an example in which one framework is set. For example, the framework includes a framework index, the number of landmarks, and the locations of landmarks.

The framework index is an index for identifying one of the frameworks. The number of landmarks is the number of landmarks for use in the framework. The locations of landmarks are basic locations of landmarks for use in the framework. For example, multiple landmarks are interpreted from the second information based on the locations of landmarks and the number of landmarks determined in the framework.

In this example, decoder 200 has only one framework as illustrated in FIG. 8. As there is only one framework, this framework is set as a default framework. In another variation, decoder 200 may have two or more frameworks each of which has a corresponding index. For example, a framework may be selected using the index from a lookup table in which two or more frameworks are set.

FIG. 21 is a diagram illustrating an example in which two frameworks are set. In this example, the framework in FIG. 9 and the framework in FIG. 10 are set in the lookup table, and framework 2 corresponding to the framework in FIG. 10 is set as the default framework. Here, it is to be noted that framework x is the framework whose index is 2.

For example, when control parameter 1 is not signaled in an access unit, the default framework is selected, and the second information (landmark information) for the access unit is interpreted using the default framework. When control parameter 1 is signaled, the second information for the access unit is interpreted using the framework specified by the index indicated by control parameter 1 in the lookup table.

### (Control Parameter 2: Customization of Frameworks)

Decoder 200 may use any of initial frameworks present in the lookup table. However, data received at decoder 200 may have used none of the initial frameworks when landmarks are derived from the driving frame at encoder 100.

Control parameter 2 is a parameter for signaling whether the framework should be customized (changed) from the initial framework. With control parameter 2, decoder 200 can interpret data received from encoder 100 even when the framework used at encoder 100 is different from the initial framework.

In one variation, the default framework present in the lookup table is replaced with the customized framework, and subsequent access units refer to this new framework.

FIG. 22 is a diagram illustrating an example in which a framework is customized from an initial framework. In this example, the framework illustrated in FIG. 8 is set as the initial framework. This framework is customized to the framework illustrated in FIG. 10, and decoder 200 interprets the second information for subsequent access units using the customized framework.

In another variation, the customized framework is added to the lookup table and is set as the default framework. Thereafter, subsequent access units can refer to the customized framework.

FIG. 23 is an example in which the customized framework is added to a set of frameworks. In this example, the customized framework is added to the lookup table and set as the default framework, and is used by decoder 200 when interpreting the second information in subsequent access units.

It is to be noted that these variations (customization and addition of the framework) may be implemented independently from the number of frameworks present in the lookup table at decoder 200. With control parameter 2, the framework is not restricted to only the initial framework, and it is possible to flexibly use the customizable frameworks.

### (Control Parameter 3: Reset of Frameworks)

In the variation as illustrated in FIG. 22, the framework is customized. Control parameter 3 is used as a parameter for signaling that the framework is reset (initialized) back to the initial framework. Then, decoder 200 can refer to the initial framework when interpreting the second information in subsequent access units.

FIG. 24 is a diagram illustrating an example in which the customized framework is reset back to the initial framework. In this example, the framework has already been customized. Control parameter 3 specifies that the current access unit and subsequent access units refer to not the customized framework but the initial framework.

Moreover, in this example, decoder 200 resets the customized framework set as the default framework back to the initial framework, and uses the initial framework to interpret the second information in subsequent access units. Another method of resetting the framework is to issue an instantaneous decoding Refresh (IDR) frame.

FIG. 25 is a diagram illustrating an example in which a set of customized frameworks is reset back to a set of initial frameworks. In this example, the customized framework has already been added to the lookup table and set as the default framework. Control parameter 3 is used as a parameter for signaling that a set of customized frameworks is reset back to a set of initial frameworks.

Specifically, control parameter 3 removes the additional customized framework, and resets the default framework back to the initial setting. Then, decoder 200 can refer to the initial default framework when interpreting the second information in subsequent access units.

### (Control Parameter 4: Number of Landmarks)

Control parameter 4 is a parameter for signaling the number of landmarks for each frame. With control parameter 4, it is possible to efficiently specifying the number of landmarks.

FIG. 26 is a diagram illustrating an example of a user interface to allow a user to select the number of landmarks. In this example, the number of landmarks for the customized framework is specified. The location of each landmark may be further specified.

This framework also can have a customizable number of landmarks for each frame. Accordingly, each access unit can include a bit sequence of one or more bits for signaling the number of landmarks for each frame.

### (Control Parameter 5: Oder of Landmarks)

When the locations of landmarks are customized, the definition of the landmark locations can be transmitted as a bitmap or a table. In another variation, the landmarks may be arranged in any order such as the reverse order of landmarks in the initial framework.

As with the case of the customization of the number of landmarks as illustrated in FIG. 26, the order of landmarks can also be customized based on levels of importance. The landmarks representing the core central region of the face such as eyes, nose and lips may be located towards the beginning of the transmitted data packet. In contrast, other landmarks such as cheeks and forehead may be located towards the end of the transmitted data packet.

FIG. 27 is a diagram illustrating an example of the order of landmarks. In this example, the landmarks are ordered based on their importance from a more important landmark to a less important landmark. Then, more important landmarks are arranged towards the beginning of the bitstream. With this, the process of the rearward landmarks is adjusted in the customization of the number of landmarks, and thus it is possible to easily scale up and down the bitstream.

It is to be noted that the order of landmarks corresponds to the processing order of landmarks, e.g., the decoding order of landmarks.

### (Control Parameter 6: Coordinate System)

Coordinates for individual landmarks in each frame can be represented in two-dimensional or three-dimensional formats. The coordinate systems may include cartesian, cylindrical, spherical, or homogenous coordinates, and may be left or right-handed. For example, control parameter 6 indicating the coordinate system used in defining the location of each landmark may be decoded from the bitstream along with the definition of origin to allow for easier interpretability of each landmark location. The origin of the coordinate system is typically the center of the camera lens or sensors.

In the use case of the cartesian coordinate system, for example, the z-axis is the camera's optical axis, and the positive z-direction corresponds to the direction of camera pointing to the face from the center of the camera. The x-axis and y-axis are defined as the horizontal and vertical directions from the center of the camera lens, respectively. When this example is applied to FIG. 8, FIG. 9, or FIG. 10, the x, y and z-axes are defined as right direction, downward direction, and direction from in front to behind the page, respectively, and the origin is defined as the center of the camera lens.

FIG. 28 is a diagram illustrating an example of coordinate systems. Specifically, FIG. 28 illustrates, as a table, an example of some coordinate system candidates with serialized indexes easily convertible into a bit sequence of one or more bits. The coordinate system candidates include categories of a coordinate system index, a coordinate system type, and left-handed or right-handed. The coordinate system candidates may further include the number of axes.

The coordinate system may be identified by specifying the coordinate system index using control parameter 6.

### (Control Parameter 7: Landmark Decoding Method)

There may be various methods of decoding landmarks. An additional bit sequence of one or more bits may be used to signal control parameter 7 indicating the landmark decoding method to be transmitted for each frame. Some examples of decoding the landmarks are described below. It is to be noted that the landmark decoding method is not restricted to the examples described below.

One example of decoding landmarks is absolute decoding (direct decoding). In other words, instead of the relative locations of landmarks, the absolute locations of landmarks may be directly decoded.

FIG. 29 is a diagram illustrating a visual example of landmarks to which absolute decoding is applied. For example, landmarks are numbered as indexes, and the absolute location of each numbered landmark is decoded.

FIG. 30 is a diagram illustrating an example of information to be decoded in the example of FIG. 29. For individual landmarks in each frame, the coordinate values indicating the absolute locations as illustrated in FIG. 30 may be decoded.

Alternatively, to reduce the amount of information to be transmitted, a key reference landmark such as the tip of the nose is selected, and other landmarks may be delta decoded from this reference landmark. By default, the reference landmark is the first landmark in each image of the bitstream. Otherwise, the reference landmark may be indicated in the landmark reference table.

FIG. 31 is a diagram illustrating a visual example of landmarks to which delta decoding is applied. The reference landmark is used as the reference location to represent the locations of other landmarks. In this example, the reference landmark is identified as landmark 0 (the first landmark in the decoded image). The arrows in FIG. 31 illustrate the reference relations, and indicate that the reference landmark (landmark 0) is referred to in decoding other landmarks. It is to be noted that, in this case, landmark x means the landmark numbered with x.

FIG. 32 is a diagram illustrating an example of information to be decoded in the example of FIG. 31. As illustrated in this example, for landmark 0, the absolute coordinate values of landmark 0 are decoded. For other landmarks, the relative coordinate values of other landmarks with respect to landmark 0 are decoded.

FIG. 33 is a diagram illustrating another visual example of landmarks to which delta decoding is applied. In this example, the landmarks are divided into categories (groups) such as nose, mouth, eyebrows and eyes, and the reference landmark is decoded for each category using absolute decoding.

The locations of all other landmarks within the same category are decoded with reference to the location of the key landmark in the category. The arrows indicate that other landmarks refer to the reference landmark within the same category (landmark 0 for nose, landmark 5 for mouth, landmark 11 for eyebrow).

FIG. 34 is a diagram illustrating an example of information to be decoded in the example of FIG. 33. As illustrated in this example, for the reference landmark of each category, the absolute coordinate values of the reference landmark are decoded. For other landmarks, the relative coordinate values of other landmarks with respect to the reference landmark are decoded.

The categories may be decoded from a bit sequence of one or more bits in the bitstream. With delta decoding, the amount of information to be transmitted for each frame is reduced.

FIG. 35 is a diagram illustrating yet another visual example of landmarks to which delta decoding is applied. In this example, instead of one reference landmark for multiple landmarks, for each of the landmarks, a neighboring landmark of the landmark is used as the reference landmark. The arrows in FIG. 35 indicate that which landmark is referred to in decoding each landmark.

FIG. 36 is a diagram illustrating an example of information to be decoded in the example of FIG. 35. For example, in this case, information indicating, for each landmark, which landmark is used as the reference landmark is also transmitted in the bitstream. Specifically, the reference landmark number for identifying the reference landmark of each landmark is decoded. The reference landmark may be arbitrarily selected.

FIG. 37 is a diagram illustrating yet another visual example of landmarks to which delta decoding is applied. When the delta decoding is performed using a neighboring landmark as the reference landmark, a spiral ordering may be introduced to identify the nearest reference landmark of each landmark. By doing so, the reference distance between landmarks can be kept to a minimum. In addition, the reference landmark number illustrated in FIG. 36 is no longer needed. This reduces the entire code amount in terms of both the elimination of the reference landmark number in FIG. 36 and the reduction in code amount of each landmark.

FIG. 38 is a diagram illustrating an example of a sparse matrix represented by projecting locations of landmarks onto a two-dimensional plane. Each landmark may occupy one or more pixels on the image. In this example, the bit equal to 1 indicates locations on the image that correspond to landmark locations, and the bit equal to 0 indicates other locations. Consequently, the landmark locations are transformed to a sparse matrix. Then, methods such as run-length decoding (FIG. 39) or array representation (FIG. 40 and FIG. 41) may be used to decode the landmark locations. For run-length decoding, a data stream in a raster scan order is decoded based on a data value and the corresponding count.

FIG. 39 is a diagram illustrating an example of run-length decoding for the example of FIG. 38. In FIG. 39, the first entry of the run-length decoding is (0, 10), which indicates that the entire first row and the first cell of the second row (total of 10 pixels) have a value of 0. The next entry of the run-length decoding is (1, 2), which indicates that the two subsequent pixels have a value of 1. This process is repeated for the entire sparse matrix.

FIG. 40 is a diagram illustrating an example of two-dimensional array representation for the example of FIG. 38. FIG. 41 is a diagram illustrating an example of one-dimensional array representation for the example of FIG. 38. Here, R represents the location of the cell in the vertical direction (the location of the row including the cell), and C represents the location of the cell in the horizontal direction (the location of the column including the cell). For array representations, the location of each landmark is decoded from the bitstream. The order of signaling landmarks may be equal to the order of appearance or indexing of landmarks.

Any combinations of one or more of the seven above-mentioned control parameters may be included into the bitstream in any order. This enhances flexibility in decoding the second information, and allows for easier understanding and interpreting the received information.

It is to be noted that, for each frame, a set of landmarks is interpreted from the second information corresponding to the frame.

It is to be noted that the methods using the abovementioned control parameters may be used not only as methods for defining the customized framework but also as methods for defining the preset framework.

Moreover, the facial landmarks are one example of geometric attributes within the region including a face, and the geometric attributes within the region including a face are not limited to the facial landmarks. For example, the geometric attributes may be represented by a polygon model instead of a group of points. In the polygon model, the shape of an object is represented by a combination of polygons. Moreover, the geometric attributes may be represented by another geometric model. Moreover, the geometric attributes may be represented by the locations of parts of the face.

Moreover, the geometric attributes may be represented in three-dimensional format or two-dimensional format. For example, the facial landmarks may be represented in three-dimensional format or two-dimensional format. The abovementioned landmarks are basically represented in three-dimensional format, but even when represented in two-dimensional format, a similar role can be played.

### [Implementation Examples]

FIG. 46 is a block diagram illustrating an implementation example of encoder 100. Encoder 100 includes circuitry 151 and memory 152. For example, the components of encoder 100 described above are implemented by circuitry 151 and memory 152.

Circuitry 151 is an electrical circuit that performs information processing, and is accessible to memory 152. For example, circuitry 151 may be a dedicated circuit that performs the encoding method according to the present disclosure, or a general circuit that executes a program corresponding to the encoding method according to the present disclosure. Circuitry 151 also may be a processor such as a CPU. Circuitry 151 further may be an aggregate of multiple circuits.

Memory 152 is a dedicated or general memory that stores information for circuitry 151 to encode an image. Memory 152 may be an electrical circuit, and may be connected to circuitry 151. Memory 152 also may be included in circuitry 151. Memory 152 also may be an aggregate of multiple circuits. Memory 152 also may be a magnetic disk or an optical disk, or may be expressed as a storage, a recording medium, or the like. Memory 152 also may be a non-volatile memory, or a volatile memory.

For example, memory 152 may store data to be encoded such as an image, or encoded data such as a bitstream. Memory 152 also may store a program for causing circuitry 151 to perform image processing. Memory 152 also may store a neural network for causing circuitry 151 to perform inferential processing. Memory 152 also may store a fundamental image.

FIG. 47 is a flow chart illustrating an example of a basic operation performed by encoder 100. Specifically, in operation, circuitry 151 of encoder 100 performs the following steps using memory 152.

Specifically, circuitry 151 encodes at least one fundamental image for use in displaying a video (S301). Circuitry 151 also encodes, as information corresponding to each of images of the video, geometric information indicating geometric attributes within a region including a face of a person (S302).

With this, it may be possible to encode the geometric information instead of each image itself of a video. Accordingly, it may be possible to reduce the code amount. Moreover, the geometric attributes can be assumed to be recognizable in various environments. Accordingly, it may be possible to enhance the versatility by using the geometric attributes.

For example, the geometric information may indicate, as the geometric attributes, locations of feature points within the region including the face of the person.

With this, it may be possible to encode the geometric information indicating, as the geometric attribute, the location of each feature point within the region including the face of the person, instead of an image itself. Accordingly, it may be possible to reduce the code amount. Moreover, the locations of feature points can be assumed to be recognizable in various environments. Accordingly, it may be possible to enhance the versatility by using the locations of the feature points.

Moreover, for example, the geometric information may indicate the locations of the feature points using three-dimensional coordinate values. With this, it may be possible to encode the geometric information representing the locations of feature points in a three-dimensional space. Accordingly, it may be possible to relatively richly express the region including the face of a person.

Moreover, for example, the geometric information may indicate the locations of the feature points using two-dimensional coordinate values. With this, it may be possible to encode the geometric information representing the locations of feature points in a two-dimensional space. Accordingly, it may be possible to relatively simply express the region including the face of a person.

Moreover, for example, circuitry 151 may encode the at least one fundamental image into a first bitstream. Circuitry 151 also may encode the geometric information into a second bitstream different from the first bitstream. With this, it may be possible to relatively easily separate the encoding of the fundamental image and the encoding of the geometric information. It also may be possible to separately manage the fundamental image and the geometric information.

Moreover, for example, circuitry 151 may encode the at least one fundamental image and the geometric information into a first bitstream. The geometric information may be included in a header of the first bitstream. The header may be a region where one or more parameters for use in encoding are described, and include supplemental enhancement information (SEI).

With this, it may be possible to relatively easily integrate the encoding of the fundamental image and the encoding of the geometric information. It also may be possible to manage the fundamental image and the geometric information together.

Moreover, for example, circuitry 151 may encode the at least one fundamental image as at least one beginning image of the video in a given period. With this, it may be possible to update the fundamental image for every given period. Accordingly, it may be possible to reduce the degradation of the image quality. It is to be noted that the given period may be a period corresponding to the entire image sequence of the video, a period corresponding to a group of picture (GOP), or an arbitrarily-determined period.

Moreover, for example, circuitry 151 may encode the at least one fundamental image as at least one beginning image in an image sequence of the video. With this, it may be possible to apply the same fundamental image to the image sequence of the video. Accordingly, it may be possible to reduce the complexity of the processing and also reduce the code amount.

Moreover, for example, circuitry 151 may encode the at least one fundamental image as at least one beginning image in a group of pictures (GOP) of the video. With this, it may be possible to update the fundamental image for every GOP. Accordingly, it may be possible to reduce the degradation of the image quality.

Moreover, for example, circuitry 151 may encode the at least one fundamental image using intra prediction. With this, it may be possible to keep the fundamental image quality relatively high. Accordingly, it may be possible to reduce the degradation of the image quality of the entire video.

Moreover, for example, circuitry 151 may generate the at least one fundamental image and the geometric information from a video for the person. With this, it may be possible to generate the fundamental image and the geometric information from one or more videos for the same person. Accordingly, it may be possible to relatively efficiently generate the fundamental image and the geometric information.

Moreover, for example, circuitry 151 may generate the at least one fundamental image from a video for a first person different from the person. Circuitry 151 also may generate the geometric information from a video for a second person who is the person. With this, it may be possible to generate the fundamental image and the geometric information from videos for different persons. Accordingly, it may be possible to relatively flexibly generate the fundamental image and the geometric information.

Moreover, for example, each of the at least one fundamental image may be an image for use instead of the person in displaying the video. With this, it may be possible to apply, to displaying of a video, an image different from an image for the person related to the geometric information. Accordingly, it may be possible to more flexibly display a video.

Moreover, for example, circuitry 151 may encode the at least one fundamental image as at least one image of the video. Circuitry 151 also may encode an image same as any of the at least one fundamental image as each of one or more remaining images of the video.

With this, it may be possible to encode the fundamental image as an image of the video. It also may be possible to encode the image same as the fundamental image as another image of the video. With this, it may be possible to use the encoding scheme of the video. It also may be possible to display the image same as the fundamental image even when the processing of the geometric information is difficult.

Moreover, for example, circuitry 151 may encode the at least one fundamental image as at least one image of the video. Circuitry 151 also may encode a substitute image as each of one or more remaining images of the video.

With this, it may be possible to encode the fundamental image as an image of the video. It also may be possible to encode the substitute image as another image of the video. With this, it may be possible to use the encoding scheme of the video. It also may be possible to simplify the processing depending on the substitute image.

Moreover, for example, circuitry 151 may encode, into a header, a signal indicating that the substitute image is used. The header may be a region where one or more parameters for use in encoding are described, and includes supplemental enhancement information (SEI). With this, it may be possible to specify that the substitute image is used. Accordingly, it may be possible to prevent a substitute image not to be displayed from being displayed.

Moreover, for example, circuitry 151 may encode, into a header, a signal for controlling a specifying method of specifying the feature points. The header may be a region where one or more parameters for use in encoding are described, and include supplemental enhancement information (SEI). With this, it may be possible to control the specifying method of specifying the feature points. Accordingly, it may be possible to relatively flexibly specify the feature points.

For example, the signal described above may be encoded into the header of the bitstream into which the geometric information is encoded. Specifically, when the geometric information is encoded into the second bitstream different from the first bitstream into which the at least one fundamental image is encoded, the signal described above may be encoded into the header of the second bitstream. Moreover, when the geometric information is encoded into the first bitstream into which the at least one image is encoded, the signal described above may be encoded into the header of the first bitstream.

Moreover, for example, the signal described above may specify a total number of the feature points. With this, it may be possible to adaptively specify the number of the feature points. Accordingly, it may be possible to specify the number of the feature points based on the processing amount, the code amount, the image quality, etc.

Moreover, for example, the signal described above may specify a coordinate system for defining the locations of the feature points. With this, it may be possible to adaptively specify the coordinate system for defining the location of each of the feature points. Accordingly, it may be possible to efficiently specify the coordinate system for indicating each of the locations.

Moreover, for example, the signal described above may specify an order of the feature points. With this, it may be possible to adaptively specify the order of the feature points. Accordingly, it may be possible to specify the order of the feature points based on the processing amount, the code amount, the image quality, etc.

Moreover, for example, the signal described above may indicate an identifier for identifying the specifying method from specifying methods. With this, it may be possible to adaptively select the specifying method from among specifying methods. Accordingly, it may be possible to select the specifying method from among specifying methods based on the processing amount, the code amount, the image quality, etc. It also may be possible to adaptively and efficiently switch between the specifying methods.

Moreover, for example, the locations of the feature points may be represented by a difference from a reference location. With this, it may be possible to reduce the code amount of the location of the feature point. Accordingly, it may be possible to reduce the code amount of the geometric information, thereby allowing for the reduction in the code amount of the video.

Moreover, for example, for the feature points, one location may be defined as the reference location. With this, it may be possible to reduce the code amount of the location of the feature point. Accordingly, it may be possible to reduce the code amount of the geometric information. It also may be possible to reduce the complexity of the processing and the increase in processing amount.

Moreover, for example, the feature points may be categorized into groups, and for each of the groups, one location may be defined as the reference location. With this, it may be possible to adaptively define the reference location according to the groups. It also may be possible to reduce the code amount of the location of the feature point using the reference location. Accordingly, it may be possible to reduce the code amount of the geometric information.

Moreover, for example, the reference location may be a location of a feature point among the feature points that is immediately before a current feature point in an encoding order. With this, it may be possible to reduce the code amount of the location of the feature point using a distance between the feature points. Accordingly, it may be possible to reduce the code amount of the geometric information.

Moreover, for example, the locations of the feature points may be represented by locations of points projected onto a two-dimensional plane from the feature points. With this, it may be possible to represent the locations of the feature points as two-dimensional coordinate values. With this, it may be possible to reduce the code amount of the location of the feature point. Accordingly, it may be possible to reduce the code amount of the geometric information.

Alternatively, encoder 100 may include an input terminal, an entropy encoder, and an output terminal. The operation performed by circuitry 151 may be performed by the entropy encoder. Moreover, the input terminal may receive data for use in the operation of the entropy encoder. The output terminal may output the data obtained by the operation of the entropy encoder.

FIG. 48 is a block diagram illustrating an implementation example of decoder 200. Decoder 200 includes circuitry 251 and memory 252. For example, the components of decoder 200 described above are implemented by circuitry 251 and memory 252.

Circuitry 251 is an electrical circuit that performs information processing, and is accessible to memory 252. For example, circuitry 251 may be a dedicated circuit that performs the decoding method according to the present disclosure, or a general circuit that executes a program corresponding to the decoding method according to the present disclosure. Circuitry 251 also may be a processor such as a CPU. Circuitry 251 further may be an aggregate of multiple circuits.

Memory 252 is a dedicated or general memory that stores information for circuitry 251 to decode an image. Memory 252 may be an electrical circuit, and may be connected to circuitry 251. Memory 252 also may be included in circuitry 251. Memory 252 also may be an aggregate of multiple circuits. Memory 252 also may be a magnetic disk or an optical disk, or may be expressed as a storage, a recording medium, or the like. Memory 252 also may be a non-volatile memory, or a volatile memory.

For example, memory 252 may store data to be decoded such as a bitstream, or decoded data such as an image. Memory 252 also may store a program for causing circuitry 251 to perform image processing. Memory 252 also may store a neural network for causing circuitry 251 to perform inferential processing. Memory 252 also may store a fundamental image.

FIG. 49 is a flow chart illustrating an example of a basic operation performed by decoder 200. Specifically, in operation, circuitry 251 of decoder 200 performs the following steps using memory 252.

Specifically, circuitry 251 decodes at least one fundamental image for use in displaying a video (S401). Circuitry 251 also decodes, as information corresponding to each of images of the video, geometric information indicating geometric attributes within a region including a face of a person (S402).

With this, it may be possible to decode the geometric information instead of each image itself of a video. Accordingly, it may be possible to reduce the code amount. Moreover, the geometric attributes can be assumed to be recognizable in various environments. Accordingly, it may be possible to enhance the versatility by using the geometric attributes.

For example, the geometric information may indicate, as the geometric attributes, locations of feature points within the region including the face of the person.

With this, it may be possible to decode the geometric information indicating, as the geometric attribute, the location of each feature point within the region including the face of the person, instead of an image itself. Accordingly, it may be possible to reduce the code amount. Moreover, the locations of feature points can be assumed to be recognizable in various environments. Accordingly, it may be possible to enhance the versatility by using the locations of the feature points.

Moreover, for example, the geometric information may indicate the locations of the feature points using three-dimensional coordinate values. With this, it may be possible to decode the geometric information representing the locations of feature points in a three-dimensional space. Accordingly, it may be possible to relatively richly express the region including the face of a person.

Moreover, for example, the geometric information may indicate the locations of the feature points using two-dimensional coordinate values. With this, it may be possible to decode the geometric information representing the locations of feature points in a two-dimensional space. Accordingly, it may be possible to relatively simply express the region including the face of a person.

Moreover, for example, circuitry 251 may decode the at least one fundamental image from a first bitstream. Circuitry 251 also may decode the geometric information from a second bitstream different from the first bitstream. With this, it may be possible to relatively easily separate the decoding of the fundamental image and the decoding of the geometric information. It also may be possible to separately manage the fundamental image and the geometric information.

Moreover, for example, circuitry 251 may decode the at least one fundamental image and the geometric information from a first bitstream. The geometric information may be included in a header of the first bitstream. The header may be a region where one or more parameters for use in decoding are described, and include supplemental enhancement information (SEI).

With this, it may be possible to relatively easily integrate the decoding of the fundamental image and the decoding of the geometric information. It also may be possible to manage the fundamental image and the geometric information together.

Moreover, for example, circuitry 251 may decode the at least one fundamental image as at least one beginning image of the video in a given period. With this, it may be possible to update the fundamental image for every given period. Accordingly, it may be possible to reduce the degradation of the image quality. It is to be noted that the given period may be a period corresponding to the entire image sequence of the video, a period corresponding to a group of picture (GOP), or an arbitrarily-determined period.

Moreover, for example, circuitry 251 may decode the at least one fundamental image as at least one beginning image in an image sequence of the video. With this, it may be possible to apply the same fundamental image to the image sequence of the video. Accordingly, it may be possible to reduce the complexity of the processing and also reduce the code amount.

Moreover, for example, circuitry 251 may decode the at least one fundamental image as at least one beginning image in a group of pictures (GOP) of the video. With this, it may be possible to update the fundamental image for every GOP. Accordingly, it may be possible to reduce the degradation of the image quality.

Moreover, for example, circuitry 251 may decode the at least one fundamental image using intra prediction. With this, it may be possible to keep the fundamental image quality relatively high. Accordingly, it may be possible to reduce the degradation of the image quality of the entire video.

Moreover, for example, circuitry 251 may generate the at least one fundamental image and the geometric information from a video for the person. With this, it may be possible to generate the fundamental image and the geometric information from one or more videos for the same person. Accordingly, it may be possible to relatively efficiently generate the fundamental image and the geometric information.

Moreover, for example, circuitry 251 may generate the at least one fundamental image from a video for a first person different from the person. Circuitry 251 also may generate the geometric information from a video for a second person who is the person. With this, it may be possible to generate the fundamental image and the geometric information from videos for different persons. Accordingly, it may be possible to relatively flexibly generate the fundamental image and the geometric information.

Moreover, for example, each of the at least one fundamental image may be an image for use instead of the person in displaying the video. With this, it may be possible to apply, to displaying of a video, an image different from an image for the person related to the geometric information. Accordingly, it may be possible to more flexibly display a video.

Moreover, for example, circuitry 251 may decode the at least one fundamental image as at least one image of the video. Circuitry 251 also may decode an image same as any of the at least one fundamental image as each of one or more remaining images of the video.

With this, it may be possible to decode the fundamental image as an image of the video. It also may be possible to decode the image same as the fundamental image as another image of the video. With this, it may be possible to use the decoding scheme of the video. It also may be possible to display the image same as the fundamental image even when the processing of the geometric information is difficult.

Moreover, for example, circuitry 251 may decode the at least one fundamental image as at least one image of the video. Circuitry 251 also may decode a substitute image as each of one or more remaining images of the video.

With this, it may be possible to decode the fundamental image as an image of the video. It also may be possible to decode the substitute image as another image of the video. With this, it may be possible to use the decoding scheme of the video. It also may be possible to simplify the processing depending on the substitute image.

Moreover, for example, circuitry 251 may decode, from a header, a signal indicating that the substitute image is used. The header may be a region where one or more parameters for use in decoding are described, and include supplemental enhancement information (SEI). With this, it may be possible to specify that the substitute image is used. Accordingly, it may be possible to prevent a substitute image not to be displayed from being displayed.

Moreover, for example, circuitry 251 may decode, from a header, a signal for controlling a specifying method of specifying the feature points. The header may be a region where one or more parameters for use in decoding are described, and include supplemental enhancement information (SEI). With this, it may be possible to control the specifying method of specifying the feature points. Accordingly, it may be possible to relatively flexibly specify the feature points.

For example, the signal described above may be decoded from the header of the bitstream from which the geometric information is decoded. Specifically, when the geometric information is decoded from the second bitstream different from the first bitstream from which the at least one fundamental image is decoded, the signal described above may be decoded from the header of the second bitstream. Specifically, when the geometric information is decoded from the first bitstream from which the at least one fundamental image is decoded, the signal described above may be decoded from the header of the first bitstream.

Moreover, for example, the signal described above may specify a total number of the feature points. With this, it may be possible to adaptively specify the number of the feature points. Accordingly, it may be possible to specify the number of the feature points based on the processing amount, the code amount, the image quality, etc.

Moreover, for example, the signal described above may specify a coordinate system for defining the locations of the feature points. With this, it may be possible to adaptively specify the coordinate system for defining the location of each of the feature points. Accordingly, it may be possible to efficiently specify the coordinate system for indicating each of the locations.

Moreover, for example, the signal described above may specify an order of the feature points. With this, it may be possible to adaptively specify the order of the feature points. Accordingly, it may be possible to specify the order of the feature points based on the processing amount, the code amount, the image quality, etc.

Moreover, for example, the signal described above may indicate an identifier for identifying the specifying method from specifying methods. With this, it may be possible to adaptively select the specifying method from among specifying methods. Accordingly, it may be possible to select the specifying method from among specifying methods based on the processing amount, the code amount, the image quality, etc. It also may be possible to adaptively and efficiently switch between the specifying methods.

Moreover, for example, the locations of the feature points may be represented by a difference from a reference location. With this, it may be possible to reduce the code amount of the location of the feature point. Accordingly, it may be possible to reduce the code amount of the geometric information, thereby allowing for the reduction in the code amount of the video.

Moreover, for example, for the feature points, one location may be defined as the reference location. With this, it may be possible to reduce the code amount of the location of the feature point. Accordingly, it may be possible to reduce the code amount of the geometric information. It also may be possible to reduce the complexity of the processing and the increase in processing amount.

Moreover, for example, the feature points may be categorized into groups. For each of the groups, one location may be defined as the reference location. With this, it may be possible to adaptively define the reference location according to the groups. It also may be possible to reduce the code amount of the location of the feature point using the reference location. Accordingly, it may be possible to reduce the code amount of the geometric information.

Moreover, for example, the reference location may be a location of a feature point among the feature points that is immediately before a current feature point in a decoding order. With this, it may be possible to reduce the code amount of the location of the feature point using a distance between the feature points. Accordingly, it may be possible to reduce the code amount of the geometric information.

Moreover, for example, the locations of the feature points may be represented by locations of points projected onto a two-dimensional plane from the feature points.

With this, it may be possible to represent the locations of the feature points as two-dimensional coordinate values. With this, it may be possible to reduce the code amount of the location of the feature point. Accordingly, it may be possible to reduce the code amount of the geometric information.

Alternatively, decoder 200 may include an input terminal, an entropy decoder, and an output terminal. The operation performed by circuitry 251 may be performed by the entropy decoder. Moreover, the input terminal may receive data for use in the operation of the entropy decoder. The output terminal may output the data obtained by the operation of the entropy decoder.

Moreover, for example, a non-transitory computer readable medium storing one or more bitstreams may be used. The one or more bitstreams may include: at least one fundamental image for use in displaying a video; and, as information corresponding to each of images of the video, geometric information indicating geometric attributes within a region including a face of a person. The one or more bitstreams may cause decoder 200 to perform a process of (i) decoding the at least one fundamental image; and (ii) decoding the geometric information.

With this, it may be possible to implement the medium storing one or more bitstreams corresponding to the decoder and decoding method described above. Accordingly, it may be possible to produce the similar effect to decoder 200 described above using the medium.

### [Other Examples]

Encoder 100 and decoder 200 in each of the above-described examples may be used as an image encoder and an image decoder, respectively, or may be used as a video encoder and a video decoder, respectively. Moreover, the components included in encoder 100 and the components included in decoder 200 may perform operations corresponding to each other.

Moreover, the term "encode" may be replaced with another term such as store, include, write, describe, signal, send out, notice, or hold, and these terms are interchangeable. For example, encoding information may be including information in a bitstream. Moreover, encoding information into a bitstream may mean that information is encoded to generate a bitstream including the encoded information.

Moreover, the term "decode" may be replaced with another term such as retrieve, parse, read, load, derive, obtain, receive, extract, or restore, and these terms are interchangeable. For example, decoding information may be obtaining information from a bitstream. Moreover, decoding information from a bitstream may mean that a bitstream is decoded to obtain information included in the bitstream.

In addition, at least a part of each example described above may be used as an encoding method or a decoding method, may be used as an entropy encoding method or an entropy decoding method, or may be used as another method.

In addition, each component may be configured with dedicated hardware, or may be implemented by executing a software program suitable for the component. Each component may be implemented by causing a program executer such as a CPU or a processor to read out and execute a software program stored on a medium such as a hard disk or a semiconductor memory.

More specifically, each of encoder 100 and decoder 200 may include processing circuitry and storage which is electrically connected to the processing circuitry and is accessible from the processing circuitry. For example, the processing circuitry corresponds to circuit 151 or 251, and the storage corresponds to memory 152 or 252.

The processing circuitry includes at least one of a dedicated hardware and a program executer, and performs processing using the storage. Moreover, when the processing circuitry includes the program executer, the storage stores a software program to be executed by the program executer.

An example of the software program described above is a bitstream. The bitstream includes an encoded image and syntaxes for performing a decoding process that decodes an image. The bitstream causes decoder 200 to execute the process according to the syntaxes, and thereby causes decoder 200 to decode an image. Moreover, for example, the software which implements encoder 100, decoder 200, or the like described above is a program indicated below.

For example, this program may cause a computer to execute an encoding method including: encoding at least one fundamental image for use in displaying a video; and encoding, as information corresponding to each of images of the video, geometric information indicating geometric attributes within a region including a face of a person.

Moreover, for example, this program may cause a computer to execute a decoding method including: decoding at least one fundamental image for use in displaying a video; and decoding, as information corresponding to each of images of the video, geometric information indicating geometric attributes within a region including a face of a person.

Moreover, each component as described above may be a circuit. The circuits may compose circuitry as a whole, or may be separate circuits. Alternatively, each component may be implemented as a general processor, or may be implemented as a dedicated processor.

Moreover, the process that is executed by a particular component may be executed by another component. Moreover, the processing execution order may be modified, or a plurality of processes may be executed in parallel. Moreover, any two or more of the examples of the present disclosure may be performed by being combined appropriately. Moreover, an encoding and decoding device may include encoder 100 and decoder 200.

In addition, the ordinal numbers such as "first" and "second" used for explanation may be changed appropriately. Moreover, the ordinal number may be newly assigned to a component, etc., or may be deleted from a component, etc. Moreover, the ordinal numbers may be assigned to components to differentiate between the components, and may not correspond to the meaningful order.

Moreover, for example, the expression of "at least one of the first element, the second element, or the third element (or one or more elements among the first element, the second element, and the third element)" corresponds to the first element, the second element, the third element, or any combination of the first element, the second element, and the third element.

Although aspects of encoder 100 and decoder 200 have been described based on a plurality of examples, aspects of encoder 100 and decoder 200 are not limited to these examples. The scope of the aspects of encoder 100 and decoder 200 may encompass embodiments obtainable by adding, to any of these embodiments, various kinds of modifications that a person skilled in the art would conceive and embodiments configurable by combining components in different embodiments, without deviating from the scope of the present disclosure.

The present aspect may be performed by combining one or more aspects disclosed herein with at least part of other aspects according to the present disclosure. In addition, the present aspect may be performed by combining, with the other aspects, part of the processes indicated in any of the flow charts according to the aspects, part of the configuration of any of the devices, part of syntaxes, etc.

### [Implementations and Applications]

As described in each of the above embodiments, each functional or operational block may typically be realized as an MPU (micro processing unit) and memory, for example. Moreover, processes performed by each of the functional blocks may be realized as a program execution unit, such as a processor which reads and executes software (a program) recorded on a medium such as ROM. The software may be distributed. The software may be recorded on a variety of media such as semiconductor memory. Note that each functional block can also be realized as hardware (dedicated circuit).

The processing described in each of the embodiments may be realized via integrated processing using a single apparatus (system), and, alternatively, may be realized via decentralized processing using a plurality of apparatuses. Moreover, the processor that executes the above-described program may be a single processor or a plurality of processors. In other words, integrated processing may be performed, and, alternatively, decentralized processing may be performed.

Embodiments of the present disclosure are not limited to the above exemplary embodiments; various modifications may be made to the exemplary embodiments, the results of which are also included within the scope of the embodiments of the present disclosure.

Next, application examples of the moving picture encoding method (image encoding method) and the moving picture decoding method (image decoding method) described in each of the above embodiments will be described, as well as various systems that implement the application examples. Such a system may be characterized as including an image encoder that employs the image encoding method, an image decoder that employs the image decoding method, or an image encoder-decoder that includes both the image encoder and the image decoder. Other configurations of such a system may be modified on a case-by-case basis.

### [Usage Examples]

FIG. 50 illustrates an overall configuration of content providing system ex100 suitable for implementing a content distribution service. The area in which the communication service is provided is divided into cells of desired sizes, and base stations ex106, ex107, ex108, ex109, and ex110, which are fixed wireless stations in the illustrated example, are located in respective cells.

In content providing system ex100, devices including computer ex111, gaming device ex112, camera ex113, home appliance ex114, and smartphone ex115 are connected to internet ex101 via internet service provider ex102 or communications network ex104 and base stations ex106 through ex110. Content providing system ex100 may combine and connect any of the above devices. In various implementations, the devices may be directly or indirectly connected together via a telephone network or near field communication, rather than via base stations ex106 through ex110. Further, streaming server ex103 may be connected to devices including computer ex111, gaming device ex112, camera ex113, home appliance ex114, and smartphone ex115 via, for example, internet ex101. Streaming server ex103 may also be connected to, for example, a terminal in a hotspot in airplane ex117 via satellite ex116.

Note that instead of base stations ex106 through ex110, wireless access points or hotspots may be used. Streaming server ex103 may be connected to communications network ex104 directly instead of via internet ex101 or internet service provider ex102, and may be connected to airplane ex117 directly instead of via satellite ex116.

Camera ex113 is a device capable of capturing still images and video, such as a digital camera. Smartphone ex115 is a smartphone device, cellular phone, or personal handyphone system (PHS) phone that can operate under the mobile communications system standards of the 2G, 3G, 3.9G, and 4G systems, as well as the next-generation 5G system.

Home appliance ex114 is, for example, a refrigerator or a device included in a home fuel cell cogeneration system.

In content providing system ex100, a terminal including an image and/or video capturing function is capable of, for example, live streaming by connecting to streaming server ex103 via, for example, base station ex106. When live streaming, a terminal (e.g., computer ex111, gaming device ex112, camera ex113, home appliance ex114, smartphone ex115, or a terminal in airplane ex117) may perform the encoding processing described in the above embodiments on still-image or video content captured by a user via the terminal, may multiplex video data obtained via the encoding and audio data obtained by encoding audio corresponding to the video, and may transmit the obtained data to streaming server ex103. In other words, the terminal functions as the image encoder according to one aspect of the present disclosure.

Streaming server ex103 streams transmitted content data to clients that request the stream. Client examples include computer ex111, gaming device ex112, camera ex113, home appliance ex114, smartphone ex115, and terminals inside airplane ex117, which are capable of decoding the above-described encoded data. Devices that receive the streamed data decode and reproduce the received data. In other words, the devices may each function as the image decoder, according to one aspect of the present disclosure.

### [Decentralized Processing]

Streaming server ex103 may be realized as a plurality of servers or computers between which tasks such as the processing, recording, and streaming of data are divided. For example, streaming server ex103 may be realized as a content delivery network (CDN) that streams content via a network connecting multiple edge servers located throughout the world. In a CDN, an edge server physically near a client is dynamically assigned to the client. Content is cached and streamed to the edge server to reduce load times. In the event of, for example, some type of error or change in connectivity due, for example, to a spike in traffic, it is possible to stream data stably at high speeds, since it is possible to avoid affected parts of the network by, for example, dividing the processing between a plurality of edge servers, or switching the streaming duties to a different edge server and continuing streaming.

Decentralization is not limited to just the division of processing for streaming; the encoding of the captured data may be divided between and performed by the terminals, on the server side, or both. In one example, in typical encoding, the processing is performed in two loops. The first loop is for detecting how complicated the image is on a frame-by-frame or scene-by-scene basis, or detecting the encoding load. The second loop is for processing that maintains image quality and improves encoding efficiency. For example, it is possible to reduce the processing load of the terminals and improve the quality and encoding efficiency of the content by having the terminals perform the first loop of the encoding and having the server side that received the content perform the second loop of the encoding. In such a case, upon receipt of a decoding request, it is possible for the encoded data resulting from the first loop performed by one terminal to be received and reproduced on another terminal in approximately real time. This makes it possible to realize smooth, real-time streaming.

In another example, camera ex113 or the like extracts a feature amount from an image, compresses data related to the feature amount as metadata, and transmits the compressed metadata to a server. For example, the server determines the significance of an object based on the feature amount and changes the quantization accuracy accordingly to perform compression suitable for the meaning (or content significance) of the image. Feature amount data is particularly effective in improving the precision and efficiency of motion vector prediction during the second compression pass performed by the server. Moreover, encoding that has a relatively low processing load, such as variable length coding (VLC), may be handled by the terminal, and encoding that has a relatively high processing load, such as context-adaptive binary arithmetic coding (CABAC), may be handled by the server.

In yet another example, there are instances in which a plurality of videos of approximately the same scene are captured by a plurality of terminals in, for example, a stadium, shopping mall, or factory. In such a case, for example, the encoding may be decentralized by dividing processing tasks between the plurality of terminals that captured the videos and, if necessary, other terminals that did not capture the videos, and the server, on a per-unit basis. The units may be, for example, groups of pictures (GOP), pictures, or tiles resulting from dividing a picture. This makes it possible to reduce load times and achieve streaming that is closer to real time.

Since the videos are of approximately the same scene, management and/or instructions may be carried out by the server so that the videos captured by the terminals can be cross-referenced. Moreover, the server may receive encoded data from the terminals, change the reference relationship between items of data, or correct or replace pictures themselves, and then perform the encoding. This makes it possible to generate a stream with increased quality and efficiency for the individual items of data.

Furthermore, the server may stream video data after performing transcoding to convert the encoding format of the video data. For example, the server may convert the encoding format from MPEG to VP (e.g., VP9), and may convert H.264 to H.265.

In this way, encoding can be performed by a terminal or one or more servers. Accordingly, although the device that performs the encoding is referred to as a "server" or "terminal" in the following description, some or all of the processes performed by the server may be performed by the terminal, and likewise some or all of the processes performed by the terminal may be performed by the server. This also applies to decoding processes.

### [3D, Multi-angle]

There has been an increase in usage of images or videos combined from images or videos of different scenes concurrently captured, or of the same scene captured from different angles, by a plurality of terminals such as camera ex113 and/or smartphone ex115. Videos captured by the terminals are combined based on, for example, the separately obtained relative positional relationship between the terminals, or regions in a video having matching feature points.

In addition to the encoding of two-dimensional moving pictures, the server may encode a still image based on scene analysis of a moving picture, either automatically or at a point in time specified by the user, and transmit the encoded still image to a reception terminal. Furthermore, when the server can obtain the relative positional relationship between the video capturing terminals, in addition to two-dimensional moving pictures, the server can generate three-dimensional geometry of a scene based on video of the same scene captured from different angles. The server may separately encode three-dimensional data generated from, for example, a point cloud and, based on a result of recognizing or tracking a person or object using three-dimensional data, may select or reconstruct and generate a video to be transmitted to a reception terminal, from videos captured by a plurality of terminals.

This allows the user to enjoy a scene by freely selecting videos corresponding to the video capturing terminals, and allows the user to enjoy the content obtained by extracting a video at a selected viewpoint from three-dimensional data reconstructed from a plurality of images or videos. Furthermore, as with video, sound may be recorded from relatively different angles, and the server may multiplex audio from a specific angle or space with the corresponding video, and transmit the multiplexed video and audio.

In recent years, content that is a composite of the real world and a virtual world, such as virtual reality (VR) and augmented reality (AR) content, has also become popular. In the case of VR images, the server may create images from the viewpoints of both the left and right eyes, and perform encoding that tolerates reference between the two viewpoint images, such as multi-view coding (MVC), and, alternatively, may encode the images as separate streams without referencing. When the images are decoded as separate streams, the streams may be synchronized when reproduced, so as to recreate a virtual three-dimensional space in accordance with the viewpoint of the user.

In the case of AR images, the server superimposes virtual object information existing in a virtual space onto camera information representing a real-world space, based on a three-dimensional position or movement from the perspective of the user. The decoder may obtain or store virtual object information and three-dimensional data, generate two-dimensional images based on movement from the perspective of the user, and then generate superimposed data by seamlessly connecting the images. Alternatively, the decoder may transmit, to the server, motion from the perspective of the user in addition to a request for virtual object information. The server may generate superimposed data based on three-dimensional data stored in the server, in accordance with the received motion, and encode and stream the generated superimposed data to the decoder. Note that superimposed data includes, in addition to RGB values, an α value indicating transparency, and the server sets the α value for sections other than the object generated from three-dimensional data to, for example, 0, and may perform the encoding while those sections are transparent. Alternatively, the server may set the background to a determined RGB value, such as a chroma key, and generate data in which areas other than the object are set as the background.

Decoding of similarly streamed data may be performed by the client (i.e., the terminals), on the server side, or divided therebetween. In one example, one terminal may transmit a reception request to a server, the requested content may be received and decoded by another terminal, and a decoded signal may be transmitted to a device having a display. It is possible to reproduce high image quality data by decentralizing processing and appropriately selecting content regardless of the processing ability of the communications terminal itself. In yet another example, while a TV, for example, is receiving image data that is large in size, a region of a picture, such as a tile obtained by dividing the picture, may be decoded and displayed on a personal terminal or terminals of a viewer or viewers of the TV. This makes it possible for the viewers to share a big-picture view as well as for each viewer to check his or her assigned area, or inspect a region in further detail up close.

In situations in which a plurality of wireless connections are possible over near, mid, and far distances, indoors or outdoors, it may be possible to seamlessly receive content using a streaming system standard such as MPEG-Dynamic Adaptive Streaming over HTTP (MPEG-DASH). The user may switch between data in real time while freely selecting a decoder or display apparatus including the user's terminal, displays arranged indoors or outdoors, etc. Moreover, using, for example, information on the position of the user, decoding can be performed while switching which terminal handles decoding and which terminal handles the displaying of content. This makes it possible to map and display information, while the user is on the move in route to a destination, on the wall of a nearby building in which a device capable of displaying content is embedded, or on part of the ground. Moreover, it is also possible to switch the bit rate of the received data based on the accessibility to the encoded data on a network, such as when encoded data is cached on a server quickly accessible from the reception terminal, or when encoded data is copied to an edge server in a content delivery service.

### [Web Page Optimization]

FIG. 51 illustrates an example of a display screen of a web page on computer ex111, for example. FIG. 52 illustrates an example of a display screen of a web page on smartphone ex115, for example. As illustrated in FIG. 51 and FIG. 52, a web page may include a plurality of image links that are links to image content, and the appearance of the web page differs depending on the device used to view the web page. When a plurality of image links are viewable on the screen, until the user explicitly selects an image link, or until the image link is in the approximate center of the screen or the entire image link fits in the screen, the display apparatus (decoder) may display, as the image links, still images included in the content or I pictures; may display video such as an animated gif using a plurality of still images or I pictures; or may receive only the base layer, and decode and display the video.

When an image link is selected by the user, the display apparatus performs decoding while giving the highest priority to the base layer. Note that if there is information in the HyperText Markup Language (HTML) code of the web page indicating that the content is scalable, the display apparatus may decode up to the enhancement layer. Further, in order to guarantee real-time reproduction, before a selection is made or when the bandwidth is severely limited, the display apparatus can reduce delay between the point in time at which the leading picture is decoded and the point in time at which the decoded picture is displayed (that is, the delay between the start of the decoding of the content to the displaying of the content) by decoding and displaying only forward reference pictures (I picture, P picture, forward reference B picture). Still further, the display apparatus may purposely ignore the reference relationship between pictures, and coarsely decode all B and P pictures as forward reference pictures, and then perform normal decoding as the number of pictures received over time increases.

### [Autonomous Driving]

When transmitting and receiving still image or video data such as two- or three-dimensional map information for autonomous driving or assisted driving of an automobile, the reception terminal may receive, in addition to image data belonging to one or more layers, information on, for example, the weather or road construction as metadata, and associate the metadata with the image data upon decoding. Note that metadata may be assigned per layer and, alternatively, may simply be multiplexed with the image data.

In such a case, since the automobile, drone, airplane, etc., containing the reception terminal is mobile, the reception terminal may seamlessly receive and perform decoding while switching between base stations among base stations ex106 through ex110 by transmitting information indicating the position of the reception terminal. Moreover, in accordance with the selection made by the user, the situation of the user, and/or the bandwidth of the connection, the reception terminal may dynamically select to what extent the metadata is received, or to what extent the map information, for example, is updated.

In content providing system ex100, the client may receive, decode, and reproduce, in real time, encoded information transmitted by the user.

### [Streaming of Individual Content]

In content providing system ex100, in addition to high image quality, long content distributed by a video distribution entity, unicast or multicast streaming of low image quality, and short content from an individual are also possible. Such content from individuals is likely to further increase in popularity. The server may first perform editing processing on the content before the encoding processing, in order to refine the individual content. This may be achieved using the following configuration, for example.

In real time while capturing video or image content, or after the content has been captured and accumulated, the server performs recognition processing based on the raw data or encoded data, such as capture error processing, scene search processing, meaning analysis, and/or object detection processing. Then, based on the result of the recognition processing, the server - either when prompted or automatically - edits the content, examples of which include: correction such as focus and/or motion blur correction; removing low-priority scenes such as scenes that are low in brightness compared to other pictures, or out of focus; object edge adjustment; and color tone adjustment. The server encodes the edited data based on the result of the editing. It is known that excessively long videos tend to receive fewer views. Accordingly, in order to keep the content within a specific length that scales with the length of the original video, the server may, in addition to the low-priority scenes described above, automatically clip out scenes with low movement, based on an image processing result. Alternatively, the server may generate and encode a video digest based on a result of an analysis of the meaning of a scene.

There may be instances in which individual content may include content that infringes a copyright, moral right, portrait rights, etc. Such instance may lead to an unfavorable situation for the creator, such as when content is shared beyond the scope intended by the creator. Accordingly, before encoding, the server may, for example, edit images so as to blur faces of people in the periphery of the screen or blur the inside of a house, for example. Further, the server may be configured to recognize the faces of people other than a registered person in images to be encoded, and when such faces appear in an image, may apply a mosaic filter, for example, to the face of the person. Alternatively, as pre- or post-processing for encoding, the user may specify, for copyright reasons, a region of an image including a person or a region of the background to be processed. The server may process the specified region by, for example, replacing the region with a different image, or blurring the region. If the region includes a person, the person may be tracked in the moving picture, and the person's head region may be replaced with another image as the person moves.

Since there is a demand for real-time viewing of content produced by individuals, which tends to be small in data size, the decoder first receives the base layer as the highest priority, and performs decoding and reproduction, although this may differ depending on bandwidth. When the content is reproduced two or more times, such as when the decoder receives the enhancement layer during decoding and reproduction of the base layer, and loops the reproduction, the decoder may reproduce a high image quality video including the enhancement layer. If the stream is encoded using such scalable encoding, the video may be low quality when in an unselected state or at the start of the video, but it can offer an experience in which the image quality of the stream progressively increases in an intelligent manner. This is not limited to just scalable encoding; the same experience can be offered by configuring a single stream from a low quality stream reproduced for the first time and a second stream encoded using the first stream as a reference.

### [Other Implementation and Application Examples]

The encoding and decoding may be performed by LSI (large scale integration circuitry) ex500 (see FIG. 50), which is typically included in each terminal. LSI ex500 may be configured of a single chip or a plurality of chips. Software for encoding and decoding moving pictures may be integrated into some type of a medium (such as a CD-ROM, a flexible disk, or a hard disk) that is readable by, for example, computer ex111, and the encoding and decoding may be performed using the software. Furthermore, when smartphone ex115 is equipped with a camera, video data obtained by the camera may be transmitted. In this case, the video data is coded by LSI ex500 included in smartphone ex115.

Note that LSI ex500 may be configured to download and activate an application. In such a case, the terminal first determines whether it is compatible with the scheme used to encode the content, or whether it is capable of executing a specific service. When the terminal is not compatible with the encoding scheme of the content, or when the terminal is not capable of executing a specific service, the terminal first downloads a codec or application software and then obtains and reproduces the content.

Aside from the example of content providing system ex100 that uses internet ex101, at least the moving picture encoder (image encoder) or the moving picture decoder (image decoder) described in the above embodiments may be implemented in a digital broadcasting system. The same encoding processing and decoding processing may be applied to transmit and receive broadcast radio waves superimposed with multiplexed audio and video data using, for example, a satellite, even though this is geared toward multicast, whereas unicast is easier with content providing system ex100.

### [Hardware Configuration]

FIG. 53 illustrates further details of smartphone ex115 shown in FIG. 50. FIG. 54 illustrates a configuration example of smartphone ex115. Smartphone ex115 includes antenna ex450 for transmitting and receiving radio waves to and from base station ex110, camera ex465 capable of capturing video and still images, and display ex458 that displays decoded data, such as video captured by camera ex465 and video received by antenna ex450. Smartphone ex115 further includes user interface ex466 such as a touch panel, audio output unit ex457 such as a speaker for outputting speech or other audio, audio input unit ex456 such as a microphone for audio input, memory ex467 capable of storing decoded data such as captured video or still images, recorded audio, received video or still images, and mail, as well as decoded data, and slot ex464 which is an interface for Subscriber Identity Module (SIM) ex468 for authorizing access to a network and various data. Note that external memory may be used instead of memory ex467.

Main controller ex460, which comprehensively controls display ex458 and user interface ex466, power supply circuit ex461, user interface input controller ex462, video signal processor ex455, camera interface ex463, display controller ex459, modulator/demodulator ex452, multiplexer/demultiplexer ex453, audio signal processor ex454, slot ex464, and memory ex467 are connected via bus ex470.

When the user turns on the power button of power supply circuit ex461, smartphone ex115 is powered on into an operable state, and each component is supplied with power from a battery pack.

Smartphone ex115 performs processing for, for example, calling and data transmission, based on control performed by main controller ex460, which includes a CPU, ROM, and RAM. When making calls, an audio signal recorded by audio input unit ex456 is converted into a digital audio signal by audio signal processor ex454, to which spread spectrum processing is applied by modulator/demodulator ex452 and digital-analog conversion and frequency conversion processing are applied by transmitter/receiver ex451, and the resulting signal is transmitted via antenna ex450. The received data is amplified, frequency converted, and analog-digital converted, inverse spread spectrum processed by modulator/demodulator ex452, converted into an analog audio signal by audio signal processor ex454, and then output from audio output unit ex457. In data transmission mode, text, still-image, or video data is transmitted by main controller ex460 via user interface input controller ex462 based on operation of user interface ex466 of the main body, for example. Similar transmission and reception processing is performed. In data transmission mode, when sending a video, still image, or video and audio, video signal processor ex455 compression encodes, by the moving picture encoding method described in the above embodiments, a video signal stored in memory ex467 or a video signal input from camera ex465, and transmits the encoded video data to multiplexer/demultiplexer ex453. Audio signal processor ex454 encodes an audio signal recorded by audio input unit ex456 while camera ex465 is capturing a video or still image, and transmits the encoded audio data to multiplexer/demultiplexer ex453. Multiplexer/demultiplexer ex453 multiplexes the encoded video data and encoded audio data using a determined scheme, modulates and converts the data using modulator/demodulator (modulator/demodulator circuit) ex452 and transmitter/receiver ex451, and transmits the result via antenna ex450.

When a video appended in an email or a chat, or a video linked from a web page, is received, for example, in order to decode the multiplexed data received via antenna ex450, multiplexer/demultiplexer ex453 demultiplexes the multiplexed data to divide the multiplexed data into a bitstream of video data and a bitstream of audio data, supplies the encoded video data to video signal processor ex455 via synchronous bus ex470, and supplies the encoded audio data to audio signal processor ex454 via synchronous bus ex470. Video signal processor ex455 decodes the video signal using a moving picture decoding method corresponding to the moving picture encoding method described in the above embodiments, and video or a still image included in the linked moving picture file is displayed on display ex458 via display controller ex459. Audio signal processor ex454 decodes the audio signal and outputs audio from audio output unit ex457. Since real-time streaming is becoming increasingly popular, there may be instances in which reproduction of the audio may be socially inappropriate, depending on the user's environment. Accordingly, as an initial value, a configuration in which only video data is reproduced, i.e., the audio signal is not reproduced, may be preferable; and audio may be synchronized and reproduced only when an input is received from the user clicking video data, for instance.

Although smartphone ex115 was used in the above example, three other implementations are conceivable: a transceiver terminal including both an encoder and a decoder; a transmitter terminal including only an encoder; and a receiver terminal including only a decoder. In the description of the digital broadcasting system, an example is given in which multiplexed data obtained as a result of video data being multiplexed with audio data is received or transmitted. The multiplexed data, however, may be video data multiplexed with data other than audio data, such as text data related to the video. Further, the video data itself rather than multiplexed data may be received or transmitted.

Although main controller ex460 including a CPU is described as controlling the encoding or decoding processes, various terminals often include Graphics Processing Units (GPUs). Accordingly, a configuration is acceptable in which a large area is processed at once by making use of the performance ability of the GPU via memory shared by the CPU and GPU, or memory including an address that is managed so as to allow common usage by the CPU and GPU. This makes it possible to shorten encoding time, maintain the real-time nature of streaming, and reduce delay. In particular, processing relating to motion estimation, deblocking filtering, sample adaptive offset (SAO), and transformation/quantization can be effectively carried out by the GPU, instead of the CPU, in units of pictures, for example, all at once.

### [Industrial Applicability]

The present disclosure is available for an encoder for encoding a video, etc., and applicable to a video teleconferencing system, etc.

### [Reference Signs List]

100, 700 encoder
101, 103, 701, 703 compressor
102, 203, 702, 803 deriver
151, 251 circuitry
152,252 memory
200, 800 decoder
201, 202, 801, 802 decompressor
204, 804 generator

## Claims

1. An encoder comprising:
memory; and
circuitry coupled to the memory, wherein
using the memory, the circuitry:
encodes at least one fundamental image for use in displaying a video; and
encodes, as information corresponding to each of images of the video, geometric information indicating geometric attributes within a region including a face of a person.

2. The encoder according to claim 1, wherein
the geometric information indicates, as the geometric attributes, locations of feature points within the region including the face of the person.

3. The encoder according to claim 2, wherein
the geometric information indicates the locations of the feature points using three-dimensional coordinate values.

4. The encoder according to claim 2, wherein
the geometric information indicates the locations of the feature points using two-dimensional coordinate values.

5. The encoder according to any one of claims 1 to 4, wherein
the circuitry:
encodes the at least one fundamental image into a first bitstream; and
encodes the geometric information into a second bitstream different from the first bitstream.

6. The encoder according to any one of claims 1 to 4, wherein
the circuitry encodes the at least one fundamental image and the geometric information into a first bitstream,
the geometric information is included in a header of the first bitstream, and
the header is a region where one or more parameters for use in encoding are described, the header including supplemental enhancement information (SEI).

7. The encoder according to any one of claims 1 to 4, wherein
the circuitry encodes the at least one fundamental image as at least one beginning image of the video in a given period.

8. The encoder according to any one of claims 1 to 4, wherein
the circuitry encodes the at least one fundamental image as at least one beginning image in an image sequence of the video.

9. The encoder according to any one of claims 1 to 4, wherein
the circuitry encodes the at least one fundamental image as at least one beginning image in a group of pictures (GOP) of the video.

10. The encoder according to any one of claims 1 to 4, wherein
the circuitry encodes the at least one fundamental image using intra prediction.

11. The encoder according to any one of claims 1 to 4, wherein
the circuitry generates the at least one fundamental image and the geometric information from a video for the person.

12. The encoder according to any one of claims 1 to 4, wherein
the circuitry:
generates the at least one fundamental image from a video for a first person different from the person; and
generates the geometric information from a video for a second person who is the person.

13. The encoder according to any one of claims 1 to 4, wherein
each of the at least one fundamental image is an image for use instead of the person in displaying the video.

14. The encoder according to any one of claims 1 to 4, wherein
the circuitry:
encodes the at least one fundamental image as at least one image of the video; and
encodes an image same as any of the at least one fundamental image as each of one or more remaining images of the video.

15. The encoder according to any one of claims 1 to 4, wherein
the circuitry:
encodes the at least one fundamental image as at least one image of the video; and
encodes a substitute image as each of one or more remaining images of the video.

16. The encoder according to claim 15, wherein
the circuitry encodes, into a header, a signal indicating that the substitute image is used, and
the header is a region where one or more parameters for use in encoding are described, the header including supplemental enhancement information (SEI).

17. The encoder according to any one of claims 2 to 4, wherein
the circuitry encodes, into a header, a signal for controlling a specifying method of specifying the feature points, and
the header is a region where one or more parameters for use in encoding are described, the header including supplemental enhancement information (SEI).

18. The encoder according to claim 17, wherein
the signal specifies a total number of the feature points.

19. The encoder according to claim 17, wherein
the signal specifies a coordinate system for defining the locations of the feature points.

20. The encoder according to claim 17, wherein
the signal specifies an order of the feature points.

21. The encoder according to claim 17, wherein
the signal indicates an identifier for identifying the specifying method from specifying methods.

22. The encoder according to any one of claims 2 to 4, wherein
the locations of the feature points are represented by a difference from a reference location.

23. The encoder according to claim 22, wherein
for the feature points, one location is defined as the reference location.

24. The encoder according to claim 22, wherein
the feature points are categorized into groups, and
for each of the groups, one location is defined as the reference location.

25. The encoder according to claim 22, wherein
the reference location is a location of a feature point among the feature points that is immediately before a current feature point in an encoding order.

26. The encoder according to claim 2 or 4, wherein
the locations of the feature points are represented by locations of points projected onto a two-dimensional plane from the feature points.

27. A decoder comprising:
memory; and
circuitry coupled to the memory, wherein
using the memory, the circuitry:
decodes at least one fundamental image for use in displaying a video; and
decodes, as information corresponding to each of images of the video, geometric information indicating geometric attributes within a region including a face of a person.

28. The decoder according to claim 27, wherein
the geometric information indicates, as the geometric attributes, locations of feature points within the region including the face of the person.

29. The decoder according to claim 28, wherein
the geometric information indicates the locations of the feature points using three-dimensional coordinate values.

30. The decoder according to claim 28, wherein
the geometric information indicates the locations of the feature points using two-dimensional coordinate values.

31. The decoder according to any one of claims 27 to 30, wherein
the circuitry:
decodes the at least one fundamental image from a first bitstream; and
decodes the geometric information from a second bitstream different from the first bitstream.

32. The decoder according to any one of claims 27 to 30, wherein
the circuitry decodes the at least one fundamental image and the geometric information from a first bitstream,
the geometric information is included in a header of the first bitstream, and
the header is a region where one or more parameters for use in decoding are described, the header including supplemental enhancement information (SEI).

33. The decoder according to any one of claims 27 to 30, wherein
the circuitry decodes the at least one fundamental image as at least one beginning image of the video in a given period.

34. The decoder according to any one of claims 27 to 30, wherein
the circuitry decodes the at least one fundamental image as at least one beginning image in an image sequence of the video.

35. The decoder according to any one of claims 27 to 30, wherein
the circuitry decodes the at least one fundamental image as at least one beginning image in a group of pictures (GOP) of the video.

36. The decoder according to any one of claims 27 to 30, wherein
the circuitry decodes the at least one fundamental image using intra prediction.

37. The decoder according to any one of claims 27 to 30, wherein
the circuitry generates the at least one fundamental image and the geometric information from a video for the person.

38. The decoder according to any one of claims 27 to 30, wherein
the circuitry:
generates the at least one fundamental image from a video for a first person different from the person; and
generates the geometric information from a video for a second person who is the person.

39. The decoder according to any one of claims 27 to 30, wherein
each of the at least one fundamental image is an image for use instead of the person in displaying the video.

40. The decoder according to any one of claims 27 to 30, wherein
the circuitry:
decodes the at least one fundamental image as at least one image of the video; and
decodes an image same as any of the at least one fundamental image as each of one or more remaining images of the video.

41. The decoder according to any one of claims 27 to 30, wherein
the circuitry:
decodes the at least one fundamental image as at least one image of the video; and
decodes a substitute image as each of one or more remaining images of the video.

42. The decoder according to claim 41, wherein
the circuitry decodes, from a header, a signal indicating that the substitute image is used, and
the header is a region where one or more parameters for use in decoding are described, the header including supplemental enhancement information (SEI).

43. The decoder according to any one of claims 28 to 30, wherein
the circuitry decodes, from a header, a signal for controlling a specifying method of specifying the feature points, and
the header is a region where one or more parameters for use in decoding are described, the header including supplemental enhancement information (SEI).

44. The decoder according to claim 43, wherein
the signal specifies a total number of the feature points.

45. The decoder according to claim 43, wherein
the signal specifies a coordinate system for defining the locations of the feature points.

46. The decoder according to claim 43, wherein
the signal specifies an order of the feature points.

47. The decoder according to claim 43, wherein
the signal indicates an identifier for identifying the specifying method from specifying methods.

48. The decoder according to any one of claims 28 to 30, wherein
the locations of the feature points are represented by a difference from a reference location.

49. The decoder according to claim 48, wherein
for the feature points, one location is defined as the reference location.

50. The decoder according to claim 48, wherein
the feature points are categorized into groups, and
for each of the groups, one location is defined as the reference location.

51. The decoder according to claim 48, wherein
the reference location is a location of a feature point among the feature points that is immediately before a current feature point in a decoding order.

52. The decoder according to claim 28 or 30, wherein
the locations of the feature points are represented by locations of points projected onto a two-dimensional plane from the feature points.

53. An encoding method comprising:
encoding at least one fundamental image for use in displaying a video; and
encoding, as information corresponding to each of images of the video, geometric information indicating geometric attributes within a region including a face of a person.

54. A decoding method comprising:
decoding at least one fundamental image for use in displaying a video; and
decoding, as information corresponding to each of images of the video, geometric information indicating geometric attributes within a region including a face of a person.

55. A non-transitory computer readable medium storing one or more bitstreams,
the one or more bitstreams including: at least one fundamental image for use in displaying a video; and, as information corresponding to each of images of the video, geometric information indicating geometric attributes within a region including a face of a person, the one or more bitstreams causing a decoder to perform a process of (i) decoding the at least one fundamental image; and (ii) decoding the geometric information.
